# EUROPEAN PATENT APPLICATION

(11) **EP 4 145 250 A1**
(43) Date of publication of application: **08.03.2023**
(21) Application number: 21808003.4
(22) Date of filing: 14.05.2021
(51) Int. Cl.: G06F 3/01, A42B 3/04

(54) **LINE-OF-SIGHT DETECTING DEVICE**

(30) Priority: 20.05.2020 WO PCT/JP2020/019862
(71) Applicant: Yamaha Hatsudoki Kabushiki Kaisha, Iwata-shi, Shizuoka 438-8501 (JP)
(72) Inventor: MORISHIMA, Keisuke, Iwata-shi, Shizuoka 438-8501 (JP); MORITA, Hiroyuki, Iwata-shi, Shizuoka 438-8501 (JP)
(74) Representative: Stöckeler, Ferdinand
(86) International application number: PCT/JP2021/018483
(87) International publication number: WO 2021/235366

(57) **Abstract**

A line-of-sight detecting device 1 includes a helmet supporter (10) that is supported by a helmet (100) worn by a user and supports a first right eye imaging device (2a1) and a first left eye imaging device (2b1). The helmet supporter (10) allows the positions of the first right eye imaging device (2a1) and the first left eye imaging device (2b1) to be changeable relative to the helmet so that a line segment (S1) connecting each of the positions of the first right eye imaging device (2a1) and the first left eye imaging device (2b 1) before the change with the position of the corresponding device after the change is in parallel to a third straight line (L3) which passes through a first end point (P1) and a helmet front upper portion (100Sa) without passing through a helmet rear upper portion (100Sb) when viewed in the left-right direction of the helmet.

## Description

### [Technical Field]

The present teaching relates to a line-of-sight detecting device which includes an imaging device configured to image eyes of a user wearing a helmet to detect the directions of lines of sight of the user and is supported by the helmet.

### [Background Art]

A line-of-sight detecting device configured to detect the direction of a human line of sight based on an image obtained by imaging an eye of a human has been known. For example, a line-of-sight detecting device supported by a helmet has been proposed as described in Patent Literature 1 in order to detect the direction of a line of sight of a user wearing a helmet, such as a rider of a motorcycle.

### [Citation List]

### [Patent Literatures]

[Patent Literature 1] U.S. Unexamined Patent Publication No. 2016/0075338

### [Summary]

### [Technical Problem]

The line-of-sight detecting device supported by the helmet is desired to highly precisely detect the directions of lines of sight of various users. The line-of-sight detecting device supported by the helmet is desired to highly precisely detect the directions of lines of sight of users wearing various types of helmets. The line-of-sight detecting device supported by the helmet is desired to highly precisely detect the directions of lines of sight of a user wearing the helmet in various situations.

An object of the present teaching is to provide a line-of-sight detecting device which is capable of highly precisely detecting the directions of lines of sight of various users wearing various types of helmets in various situations.

### [Solution to Problem]

(1) A line-of-sight detecting device of an embodiment of the present teaching has the following features. The line-of-sight detecting device comprises: a first right eye imaging device which is configured to image the right eye of a user in order to detect the direction of a line of sight of the right eye of the user; a first left eye imaging device which is configured to image the left eye of a user in order to detect the direction of a line of sight of the left eye of the user; and a helmet supporter which is supported by a helmet worn by the user and supports the first right eye imaging device and the first left eye imaging device. The helmet supporter is supported by the helmet and supports the first right eye imaging device and the first left eye imaging device so that positions of the first right eye imaging device and the first left eye imaging device are changeable relative to the helmet. When (i) a point which is in a part in contact with the frontal region of the user in a helmet vertical cross section that is a cross section of the helmet taken along a direction orthogonal to a left-right direction of the helmet, and which is farthest from the parietal region of the user, is referred to as a first end point, (ii) a point that is in a part in contact with the occipital region or the regio cervicalis posterior of the user in the helmet vertical cross section and is farthest from the parietal region of the user is referred to as a second end point, (iii) a straight line passing through the first end point and the second end point is referred to as a first straight line, (iv) a straight line which passes through a point equidistant from the first end point and the second end point and on the first straight line and which is orthogonal to both the left-right direction and the first straight line is referred to as a second straight line, (v) in the helmet vertical cross section, a portion which includes a part in contact with the frontal region of the user and has the first straight line and the second straight line as boundaries is referred to as a helmet front upper portion, and (vi) in the helmet vertical cross section, a portion which is connected to the helmet front upper portion at the second straight line and has the first straight line and the second straight line as boundaries is referred to as a helmet rear upper portion, the helmet supporter allows the positions of the first right eye imaging device and the first left eye imaging device to be changeable relative to the helmet so that a line segment connecting each of the positions of the first right eye imaging device and the first left eye imaging device before change with the position of the corresponding device after the change is in parallel to a third straight line that passes through the first end point and the helmet front upper portion without passing through the helmet rear upper portion when viewed in the left-right direction.

The shape of a head and positions of eyes on the head are individually different between users. On account of individual differences between the heads of the users, the positions of the eyes relative to a helmet are different between the users. The difference tends to be particularly evident in a substantially up-down direction for the users. Furthermore, due to differences in type between helmets, the relationship between the positions of eyes of the user and the helmet is different between different types of the helmets. The difference tends to be particularly evident in a substantially up-down direction for the user. Furthermore, when a user rides a vehicle, the riding posture of the user is different between the types of vehicles. For example, in a sport bike, the upper body (including the head) of the user leans forward. On the other hand, in a scooter, the upper body of the user scarcely leans forward. Depending on the type of vehicle, the upper body (including the head) of the user may lean rearward. Furthermore, even when the vehicle is of the same type, the riding posture of each user may be different between the users depending on the physical constitution of the user (e.g., height and lengths of arms and legs). When the tilt of the head of each user is different due to a difference in the riding posture, the directions of lines of sight of the user relative to the head are different between the users even if each user sees an obstacle that is at the same height as the head of the user. In other words, when the tilt of the head of each user is different due to a difference in the riding posture, the directions of normal lines of sight of the user relative to the helmet are different between the users. Due to this, when the tilt of the head of the user is different due to a difference in the riding posture, positions of the first right eye imaging device and the first left eye imaging device relative to the helmet, at which the detection accuracy of the direction of a line of sight is high, are different between the users.

The helmet supporter is supported by the helmet worn by the user and supports the first right eye imaging device and the first left eye imaging device so that the positions of the first right eye imaging device and the first left eye imaging device are changeable relative to the helmet worn by the user. Furthermore, the helmet supporter allows the positions of the first right eye imaging device and the first left eye imaging device to be changeable relative to the helmet so that a line segment connecting each of the positions of the first right eye imaging device and the first left eye imaging device before change with the position of the corresponding device after the change is in parallel to the third straight line that passes through the first end point and the helmet front upper portion without passing through the helmet rear upper portion when viewed in the left-right direction. On this account, the helmet supporter allows the positions of the first right eye imaging device and the first left eye imaging device to be changeable relative to the helmet in a substantially up-down direction for the user.

It is therefore possible to adjust the positions of the first right eye imaging device and the first left eye imaging device relative to the helmet in accordance with positions of the eyes of the user relative to the helmet, even if the positions of the eyes of the user relative to the helmet are different between users in a substantially up-down direction for the user, due to individual differences between the heads of the users. For this reason, it is possible to highly precisely detect the directions of lines of sight of various users wearing helmets.

It is therefore possible to adjust the positions of the first right eye imaging device and the first left eye imaging device relative to the helmet in accordance with the type of the helmet, even if the relationship between the positions of the eyes of the user and the helmet is different between different types of the helmets in a substantially up-down direction for the user. For this reason, it is possible to highly precisely detect the directions of lines of sight of various users wearing various types of helmets. Furthermore, even if the (forward or rearward) tilt of the head of the user is different due to a difference in the riding posture, the positions of the first right eye imaging device and the first left eye imaging device relative to the helmet can be adjusted in accordance with the tilt of the head of the user. For this reason, it is possible to highly precisely detect the directions of lines of sight of users wearing helmets in various situations.

Because of the above, the line-of-sight detecting device of the present teaching makes it possible to highly precisely detect the directions of lines of sight of various users wearing various types of helmets in various situations.

In the present teaching and the embodiments, "the left-right direction of a helmet" is a direction that can be specified based on the helmet. On this account, the helmet of the present teaching does not encompass a helmet based on which the left-right direction cannot be specified. In the present teaching and the embodiments, "a helmet vertical cross section" indicates only a portion of a helmet, which exists on a single flat plane orthogonal to the left-right direction of the helmet, and does not encompass a space inside the helmet. When a helmet has a nape strap, the helmet vertical cross section may or may not include part of the nape strap. The nape strap makes contact with the regio cervicalis posterior. When the nape strap is made of a soft material and cannot maintain its shape, the helmet vertical cross section may not include the nape strap. When the nape strap is able to maintain its shape, the helmet vertical cross section may or may not include part of the nape strap.

In the present teaching and the embodiments, "a part in contact with the frontal region of a user in a helmet vertical cross section" is a linear part which is included in a contact portion of the helmet and the frontal region of the user and which exists only in the helmet vertical cross section. "A part in contact with the frontal region of a user in a helmet vertical cross section" is a part that is formed in consideration of contact with the frontal region of the user when the helmet is in normal use. Depending on the shape of the head of the user, this part may not make contact with the frontal region of the user. In the present teaching and the embodiments, "in contact with the frontal region of a user" indicates direct or indirect contact with the frontal region of the user. The indirect contact encompasses, for example, contact with the frontal region of a user wearing an inner cap and a helmet, through the inner cap. The indirect contact encompasses, for example, contact with the frontal region of a user through the hair of the user.

"A part in contact with the occipital region of a user in a helmet vertical cross section" and "a part in contact with the regio cervicalis posterior of a user in a helmet vertical cross section" are defined in a manner similar to "a part in contact with the frontal region of a user in a helmet vertical cross section". In this specification, "frontal region" indicates a frontal region in an anatomical sense. The frontal region is a portion where the frontal bone exists. In this specification, "occipital region" indicates a occipital region in an anatomical sense. The occipital region is a portion where the occipital bone exists. "Regio cervicalis posterior" is an anatomical term. The regio cervicalis posterior is connected to the lower end of the occipital region. In this specification, "parietal region" indicates a parietal region in an anatomical sense. The parietal region is a region where the parietal bone exists.

In the present teaching and the embodiments, "a point that is in a part in contact with the frontal region of a user in a helmet vertical cross section and is farthest from the parietal region of the user" is an end of a part in contact with the frontal region of the user in the helmet vertical cross section. "A point that is in a part in contact with the occipital region or the regio cervicalis posterior of a user in a helmet vertical cross section and is farthest from the parietal region of the user" is an end of a part in contact with the occipital region or the regio cervicalis posterior of the user in the helmet vertical cross section. In the present teaching and the embodiments, "a first end point" and "a second end point" are points that exist only in a helmet vertical cross section. When a user wearing a helmet stands erect, the first end point is the lower end of a part in contact with the frontal region of the user in the helmet vertical cross section. When a user wearing a helmet stands erect, the second end point is the lower end of a part in contact with the occipital region or the regio cervicalis posterior of the user in the helmet vertical cross section. When a helmet is in contact with both the occipital region and the regio cervicalis posterior of a user in a helmet vertical cross section, the second end point may be a point farthest from the parietal region in a part in contact with the regio cervicalis posterior. When a helmet is in contact with both the occipital region and the regio cervicalis posterior of a user in a helmet vertical cross section, the second end point is preferably a point farthest from the parietal region in a part in contact with the regio cervicalis posterior in consideration of easiness of specifying the second end point, but the second end point may be a point farthest from the parietal region in a part in contact with the occipital region. In this specification, a state in which a user stands erect indicates a state in which neither the body of the user nor the head of the user is tilted. In this specification, an up-down direction for a user is an up-down direction for a user who is in a state of standing erect. In this specification, a front-rear direction for a user is a front-rear direction for a user who is in a state of standing erect. In the present teaching and the embodiments, "a helmet front upper portion" and "a helmet rear upper portion" exist only in a helmet vertical cross section. The "helmet rear upper portion" is either in contact with only the occipital region or in contact with both the occipital region and the regio cervicalis posterior. In the present teaching, a part forming the border of the helmet front upper portion in a first straight line is not encompassed in the helmet front upper portion. In other words, a first end point is not encompassed in the helmet front upper portion. Likewise, a second end point is not encompassed in the helmet rear upper portion.

In the present teaching and the embodiments, "a line segment connecting each of positions of a first right eye imaging device and a first left eye imaging device before change with the position of the corresponding device after the change" is each of a line segment connecting the position of the first right eye imaging device before change with the position of the first right eye imaging device after the change and a line segment connecting the position of the first left eye imaging device before change with the position of the first left eye imaging device after the change. "A line segment connecting the position of the first right eye imaging device before change with the position of the first right eye imaging device after the change" is a line segment connecting the position of the first right eye imaging device before the position of the first right eye imaging device relative to the helmet is changed with the position of the first right eye imaging device after the position of the first right eye imaging device is changed relative to the helmet. "Aline segment connecting the position of the first right eye imaging device before change with the position of the first right eye imaging device after the change" is a line segment connecting the position of one point of the first right eye imaging device before change with the position of the same point after the change. For example, the line segment may be a line segment connecting the position of an imaging element of the first right eye imaging device before change with the position of the imaging element after the change. Alternatively, for example, the line segment may be a line segment connecting the position of a lens of the first right eye imaging device before change with the position of the lens after the change. "A line segment connecting the position of a first left eye imaging device before change with the position of the first left eye imaging device after the change" is similar to the definition of "a line segment connecting the position of a first right eye imaging device before change with the position of the first right eye imaging device after the change".

In the present teaching and the embodiments, a concept "a line segment connecting each of the positions of a first right eye imaging device and a first left eye imaging device before change with the position of the corresponding device after the change is in parallel to a third straight line when viewed in a left-right direction of a helmet" indicates that, when viewed in the left-right direction of the helmet, these two line segments are in parallel to the common single straight line (third straight line). Alternatively, in the present teaching and the embodiments, the helmet supporter may allow the position of each of the first right eye imaging device and the first left eye imaging device to be individually changeable relative to the helmet so that the two line segments are in parallel to the common third straight line when viewed in the left-right direction of the helmet. On the other hand, the helmet supporter may allow the positions of the first right eye imaging device and the first left eye imaging device to be integrally changeable relative to the helmet so that the two line segments are in parallel to the common third straight line when viewed in the left-right direction of the helmet.

In the present teaching and the embodiments, the concept "a line segment connecting each of the positions of a first right eye imaging device and a first left eye imaging device before change with the position of the corresponding device after the change is in parallel to a third straight line when viewed in a left-right direction of a helmet" is not limited to a case where both of these two line segments are separated from the third straight line when viewed in the left-right direction of the helmet. This concept encompasses a case where at least one of the line segments overlaps the third straight line when viewed in the left-right direction of the helmet.

Depending on the type of helmet, it may be difficult to accurately specify the first end point and the second end point. In such a case, it is possible to specify a portion of the helmet vertical cross section where the first end point may be included (i.e., first portion) and a portion of the helmet vertical cross section where the second end point may be included (i.e., second portion). When the following relationship is established, it is determined that the line-of-sight detecting device has the above-described arrangement (1). In the helmet vertical cross section, points at an end of the first portion are regarded as tentative first end points. In the helmet vertical cross section, points at an end of the second portion are regarded as tentative second end points. An arrangement in which each first end point and each second end point in the arrangement (1) above is replaced with a tentative first end point and a tentative second end point is regarded as a tentative arrangement (1). Irrespective of a combination of a tentative first end point and a tentative second end point, it is determined that the line-of-sight detecting device has the arrangement (1) described above, when the line-of-sight detecting device has the tentative arrangement (1). By a similar method, it is possible to determine whether the line-of-sight detecting device has a later-described arrangement (3). By a similar method, it is possible to determine whether the line-of-sight detecting device has a later-described arrangement (5). By a similar method, it is possible to determine whether the line-of-sight detecting device has a later-described arrangement (7). It is noted that the first portion should not be interpreted too broadly. The first portion excludes a part of the helmet vertical cross section, which is obviously free from the first end point. The second portion should not be interpreted too broadly, either.

(2) The line-of-sight detecting device of an embodiment of the present teaching may have the following feature in addition to the features of the arrangement (1). The helmet supporter allows the positions of the first right eye imaging device and the first left eye imaging device to be changeable relative to the helmet so that the first right eye imaging device and the first left eye imaging device move in a direction in parallel to the third straight line when viewed in the left-right direction.

According to this arrangement, the helmet supporter is able to move, relative to the helmet, the first right eye imaging device and the first left eye imaging device linearly in a substantially up-down direction for the user when viewed in the left-right direction. As another arrangement with which the position of an eye imaging device relative to a helmet is changed in a substantially up-down direction for a user, a member supporting the eye imaging device may be swung about a shaft member that is in parallel to the left-right direction of the helmet. With this arrangement, however, when the position of the eye imaging device relative to the helmet is significantly changed in the substantially up-down direction for the user, the position of the eye imaging device relative to the helmet is unintentionally changed in a substantially front-rear direction for the user, too.

On account of individual differences between the heads of the users, the positions of the eyes relative to a helmet are different between the users in the substantially up-down direction for the users. In such a case, the positional adjustment is easily done by moving the first right eye imaging device and the first left eye imaging device relative to the helmet in a linear manner when viewed in the left-right direction, rather than swinging the first right eye imaging device and the first left eye imaging device about a shaft member in parallel to the left-right direction of the helmet. This makes it easy to provide the first right eye imaging device and the first left eye imaging device at positions where the detection accuracy of detecting the directions of lines of sight is high. It is therefore possible to further highly precisely detect the directions of lines of sight of various users.

Meanwhile, the positions of the first right eye imaging device and the first left eye imaging device relative to the eyes of each user may be significantly different between helmets in a substantially up-down direction for users, on account of differences in type of helmets. In such a case, the positional adjustment is easily done by greatly moving the first right eye imaging device and the first left eye imaging device relative to the helmet in a linear manner when viewed in the left-right direction, rather than greatly swinging the first right eye imaging device and the first left eye imaging device about a shaft member in parallel to the left-right direction of the helmet. This makes it easy to provide the first right eye imaging device and the first left eye imaging device at positions where the detection accuracy of detecting the directions of lines of sight. For this reason, it is possible to further highly precisely detect the directions of lines of sight of various users wearing various types of helmets.

In addition to the above, in an arrangement in which a member supporting an eye imaging device is swung about a shaft member that is in parallel to the left-right direction of a helmet, when, in particular, the distance between the swing center and the eye imaging device is short when viewed in the left-right direction, the eye imaging device tends to be provided at a position where the upper eyelid, the upper eyelash, the lower eyelid, or the lower eyelash of the user obstructs the detection of the direction of a line of sight. To put it differently, in an image taken by the eye imaging device, the eye of the user is at least partially hidden behind the upper eyelid, the upper eyelash, the lower eyelid, or the lower eyelash. In this regard, when the first right eye imaging device and the first left eye imaging device are moved relative to the helmet in a linear manner when viewed in the left-right direction, the first right eye imaging device and the first left eye imaging device are unlikely to be provided at positions where the upper eyelid, the upper eyelash, the lower eyelid, or the lower eyelash obstructs the detection of the direction of a line of sight. On this account, the detection accuracy of detecting the direction of a line of sight is maintained even when the positions of the first right eye imaging device and the first left eye imaging device are changed relative to the helmet.

In addition to the above, in an arrangement in which one or two member supporting an eye imaging device is swung about a shaft member that is in parallel to the left-right direction of a helmet, when, in particular, the distance between the swing center and the eye imaging device is long when viewed in the left-right direction, the member the eye imaging device tends to vibrate due to the vibration of the helmet with the line-of-sight detecting device in use. In this regard, when the first right eye imaging device and the first left eye imaging device are moved relative to the helmet in a linear manner when viewed in the left-right direction, the position where the member supporting the first right eye imaging device (first left eye imaging device) supported is less restricted. It is therefore possible to support the member supporting the first right eye imaging device (first left eye imaging device) at a position close to the first right eye imaging device (first left eye imaging device). On this account, even if the helmet vibrates while the line-of-sight detecting device is in use, the member supporting the first right eye imaging device (first left eye imaging device) is less unlikely to vibrate. Due to this, it is possible to further highly precisely detect the directions of lines of sight of users wearing helmets in various situations.

(3) The line-of-sight detecting device of an embodiment of the present teaching may have the following feature in addition to the features of the arrangement (1) or (2).

The helmet supporter allows the positions of the first right eye imaging device and the first left eye imaging device to be changeable relative to the helmet so that each of the first right eye imaging device and the first left eye imaging device moves relative to the helmet along a curved locus when viewed in the left-right direction and the line segment connecting each of the positions of the first right eye imaging device and the first left eye imaging device before the change with the position of the corresponding device after the change is in parallel to the third straight line when viewed in the left-right direction.

(4) The line-of-sight detecting device of an embodiment of the present teaching may have the following feature in addition to the features of at least one of the arrangements (1) to (3). The helmet supporter is arranged so that the first right eye imaging device and the first left eye imaging device are swingable relative to the helmet about an axial line that is in parallel to the left-right direction.

With this arrangement, the helmet supporter allows the direction of imaging by the first right eye imaging device and the first left eye imaging device to be changed relative to the helmet. When the axial line about which the first right eye imaging device and the first left eye imaging device swing is remote from the devices, the helmet supporter allows the positions of the first right eye imaging device and the first left eye imaging device to be changeable relative to the helmet in a circumferential direction about an axial line that is in parallel to the left-right direction of the helmet.

It is therefore possible to adjust the positions of the first right eye imaging device and the first left eye imaging device relative to the helmet in the circumferential direction about the axial line in parallel to the left-right direction of the helmet, even if the positions of the eyes of the user relative to the helmet are different between users due to individual differences between the heads of the users. Furthermore, it is possible to adjust the direction of imaging by the first right eye imaging device and the first left eye imaging device relative to the helmet, in accordance with the positions of the eyes of the user relative to the helmet. For this reason, it is possible to further highly precisely detect the directions of lines of sight of various users wearing helmets.

It is therefore possible to adjust the positions of the first right eye imaging device and the first left eye imaging device relative to the helmet in the circumferential direction about the axial line in parallel to the left-right direction of the helmet, even if the relationship between the positions of the eyes of the user and the helmet is different between different types of the helmets. Furthermore, it is possible to adjust the direction of imaging by the first right eye imaging device and the first left eye imaging device relative to the helmet, in accordance with the positions of the eyes of the user relative to the helmet. For this reason, it is possible to further highly precisely detect the directions of lines of sight of various users wearing various types of helmets.

As described above, when the tilt of the head of the user is different due to a difference in the riding posture, the positions of the first right eye imaging device and the first left eye imaging device relative to the helmet, at which the detection accuracy of the direction of a line of sight is high, are different between the users. Moreover, when the tilt of the head of the user is different due to a difference in the riding posture, the directions of imaging of the first right eye imaging device and the first left eye imaging device relative to the helmet, in which the detection accuracy of detecting the direction of a line of sight is high, are different between the users. When the (forward or rearward) tilt of the head of the user is different due to a difference in the riding posture, the positions of the first right eye imaging device and the first left eye imaging device relative to the helmet can be adjusted in accordance with the tilt of the head of the user in the circumferential direction about the axis in parallel to the left-right direction of the helmet. Furthermore, it is possible to adjust the direction of imaging by the first right eye imaging device and the first left eye imaging device relative to the helmet, in accordance with the tilt of the head of the user. For this reason, it is possible to further highly precisely detect the directions of lines of sight of users wearing helmets in various situations.

In the specification, "swingable" indicates that rotation of less than 360 degrees is possible. It is noted that the concept "swingable" does not exclude rotation of equal to or more than 360 degrees. For example, when a helmet supporter supports a first right eye imaging device and a first left eye imaging device to be rotatable for 360 degrees, the positions of the first right eye imaging device and the first left eye imaging device may be changeable relative to the helmet so that a line segment connecting each of the positions of the first right eye imaging device and the first left eye imaging device before the change with the position of the corresponding device after the change is in parallel to the third straight line when viewed in the left-right direction of the helmet. In the present teaching, however, the concept "the positions of the first right eye imaging device and the first left eye imaging device are changeable relative to the helmet so that a line segment connecting each of the positions of the first right eye imaging device and the first left eye imaging device before the change with the position of the corresponding device after the change is in parallel to the third straight line when viewed in the left-right direction of the helmet" indicates that the positions of the first right eye imaging device and the first left eye imaging device are changeable within a range in which the possibility of using the line-of-sight detecting device exists.

The arrangement (3) described above may be realized by the arrangement (4) described above. In other words, the helmet supporter of the present teaching may allow the first right eye imaging device and the first left eye imaging device to be swingable relative to the helmet about the axial line in parallel to the left-right direction of the helmet so that a line segment connecting each of the positions of the first right eye imaging device and the first left eye imaging device before the change with the position of the corresponding device after the change is in parallel to the third straight line when viewed in a direction orthogonal to the left-right direction.

The arrangement (3) described above may be realized by an arrangement different from the arrangement (4) described above.

(5) The line-of-sight detecting device of an embodiment of the present teaching may have the following feature in addition to the features of at least one of the arrangements (1) to (4). The helmet supporter allows the positions of the first right eye imaging device and the first left eye imaging device to be changeable relative to the helmet so that a line segment connecting each of the positions of the first right eye imaging device and the first left eye imaging device before the change with the position of the corresponding device after the change is in parallel to a fourth straight line that passes through the first end point and the helmet rear upper portion without passing through the helmet front upper portion when viewed in the left-right direction.

According to this arrangement, the helmet supporter allows the positions of the first right eye imaging device front-rear direction and the first left eye imaging device to be changeable relative to the helmet in a substantially front-rear direction for the user.

On account of individual differences between the heads of the users, the positions of the eyes relative to a helmet may be different between the users in the substantially front-rear direction for the users. In such a case, it is possible to adjust the positions of the first right eye imaging device and the first left eye imaging device relative to the helmet in the substantially front-rear direction for the user, in accordance with the positions of the eyes of the user relative to the helmet. For this reason, it is possible to further highly precisely detect the directions of lines of sight of various users wearing helmets. On account of differences between the types of the helmets, the relationship between the positions of the eyes and a helmet may be different between the different types of helmets in the substantially front-rear direction for the users. In such a case, it is possible to adjust the positions of the first right eye imaging device and the first left eye imaging device relative to the helmet in the substantially front-rear direction for the user, in accordance with the type of the helmet. For this reason, it is possible to further highly precisely detect the directions of lines of sight of various users wearing various types of helmets.

Furthermore, even if the (forward or rearward) tilt of the head of the user is different due to a difference in the riding posture, the positions of the first right eye imaging device and the first left eye imaging device relative to the helmet can be adjusted in accordance with the tilt of the head of the user, in the substantially front-rear direction for the user. For this reason, it is possible to further highly precisely detect the directions of lines of sight of users wearing helmets in various situations.

In the present teaching and the embodiments, a concept "a line segment connecting each of the positions of a first right eye imaging device and a first left eye imaging device before change with the position of the corresponding device after the change is in parallel to a fourth straight line when viewed in a left-right direction of a helmet" indicates that, when viewed in the left-right direction of the helmet, these two line segments are in parallel to the common single straight line (fourth straight line). Alternatively, in the present teaching and the embodiments, the helmet supporter may allow the position of each of the first right eye imaging device and the first left eye imaging device to be individually changeable relative to the helmet so that the two line segments are in parallel to the common fourth straight line when viewed in the left-right direction of the helmet. On the other hand, the helmet supporter may allow the positions of the first right eye imaging device and the first left eye imaging device to be integrally changeable relative to the helmet so that the two line segments are in parallel to the common fourth straight line when viewed in the left-right direction of the helmet.

In the present teaching and the embodiments, the concept "a line segment connecting each of the positions of a first right eye imaging device and a first left eye imaging device before change with the position of the corresponding device after the change is in parallel to a fourth straight line when viewed in a left-right direction of a helmet" is not limited to a case where both of these two line segments are separated from the fourth straight line when viewed in the left-right direction of the helmet. This concept encompasses a case where at least one of the line segments overlaps the fourth straight line when viewed in the left-right direction of the helmet.

The arrangement (5) described above may be realized by the arrangement (4) described above. In other words, the helmet supporter of the present teaching may allow the first right eye imaging device and the first left eye imaging device to be swingable relative to the helmet about the axial line in parallel to the left-right direction of the helmet so that a line segment connecting each of the positions of the first right eye imaging device and the first left eye imaging device before the change with the position of the corresponding device after the change is in parallel to the fourth straight line when viewed in a direction orthogonal to the left-right direction. The arrangement (5) described above may be realized by an arrangement different from the arrangement (4) described above. In this case, the helmet supporter may allow the positions of the first right eye imaging device and the first left eye imaging device to be changeable relative to the helmet so that the first right eye imaging device and the first left eye imaging device move in parallel to the fourth straight line when viewed in the left-right direction of the helmet.

(6) The line-of-sight detecting device of an embodiment of the present teaching may have the following feature in addition to the features of any one of the arrangements (1) to (5). The helmet supporter allows the positions of the first right eye imaging device and the first left eye imaging device to be changeable relative to the helmet so that a line segment connecting each of the positions of the first right eye imaging device and the first left eye imaging device before the change with the position of the corresponding device after the change is in parallel to the left-right direction when viewed in a direction orthogonal to the left-right direction.

With this arrangement, the helmet supporter allows the positions of the first right eye imaging device and the first left eye imaging device to be changeable relative to the helmet in the left-right direction of the helmet.

On account of individual differences between the heads of the users, the positions of the eyes of the user relative to the helmet may be different between users in the left-right direction of the helmet. In such a case, it is possible to adjust the positions of the first right eye imaging device and the first left eye imaging device relative to the helmet in accordance with the positions of the eyes of the user relative to the helmet. For this reason, it is possible to further highly precisely detect the directions of lines of sight of various users wearing helmets.

In the present teaching and the embodiments, a concept "a line segment connecting each of the positions of a first right eye imaging device and a first left eye imaging device before change with the position of the corresponding device after the change is in parallel to a left-right direction of a helmet when viewed in a direction orthogonal to the left-right direction of the helmet" is not limited to a case where both of these two line segments are in parallel to the left-right direction of the helmet when viewed in one direction orthogonal to the left-right direction of the helmet. A first line segment among the line segments may be in parallel to the left-right direction of the helmet when viewed in a first direction orthogonal to the left-right direction of the helmet, and a second line segment among the line segments may be in parallel to the left-right direction of the helmet when viewed in a second direction that is orthogonal to the left-right direction of the helmet and is different from the first direction.

(7) The line-of-sight detecting device of an embodiment of the present teaching may have the following feature in addition to the features of any one of the arrangements (1) to (6). The line-of-sight detecting device further comprises: at least one second right eye imaging device which is configured to image the right eye of the user in order to detect the direction of the line of sight of the right eye of the user; and at least one second left eye imaging device which is configured to image the left eye of the user in order to detect the direction of the line of sight of the left eye of the user, the helmet supporter allowing the positions of the first right eye imaging device and the first left eye imaging device to be changeable relative to the helmet so that a line segment connecting each of the positions of the at least one second right eye imaging device and the at least one second left eye imaging device before the change with the position of the corresponding device after the change is in parallel to a straight line that passes through the first end point and the helmet front upper portion without passing through the helmet rear upper portion when viewed in the left-right direction.

According to this arrangement, the line-of-sight detecting device includes plural right eye imaging devices (the first right eye imaging device and the at least one second right eye imaging device) and plural left eye imaging devices (the first left eye imaging device and the at least one second left eye imaging device). It is therefore possible to detect the directions of lines of sight of the user by using the right eye imaging device and the left eye imaging device that are at positions where the detection accuracy is highest, among the plural right eye imaging devices and the plural left imaging devices. Due to this it is possible to further highly precisely detect the directions of lines of sight of various users wearing various types of helmets in various situations. Furthermore, the directions of lines of sight of the user can be highly precisely detected even if the directions of lines of sight of the user significantly vary while the line-of-sight detecting device is in use.

In the present teaching and the embodiments, a concept "a line segment connecting each of the positions of at least one second right eye imaging device and at least one second left eye imaging device before change with the position of the corresponding device after the change is in parallel to a straight line that passes through a first end point and a helmet front upper portion without passing through a helmet rear upper portion when viewed in a left-right direction of a helmet" is not limited to a case where these plural line segments are in parallel the a single common straight line when viewed in the left-right direction of the helmet. When viewed in the left-right direction of the helmet, the plural line segments may not be in parallel to each other as long as each of the line segments is in parallel to a straight line which passes through the first end point and the helmet front upper portion and does not pass through the helmet rear upper portion when viewed in the left-right direction of the helmet. When viewed in the left-right direction of the helmet, the plural line segments may be in parallel to a common third straight line.

In the present teaching and the embodiments, a concept "a line segment connecting each of the positions of at least one second right eye imaging device and at least one second left eye imaging device before change with the position of the corresponding device after the change is in parallel to a straight line that passes through a first end point and a helmet front upper portion without passing through a helmet rear upper portion when viewed in a left-right direction of a helmet" is not limited to a case where each of these line segments is separated from the straight line in parallel to the corresponding line segment when viewed in the left-right direction of the helmet. This concept encompasses a case where at least one of the line segments overlaps the straight line in parallel to the corresponding line segment when viewed in the left-right direction of the helmet.

(8) The line-of-sight detecting device of an embodiment of the present teaching may have the following feature in addition to the features of the arrangement (7). The helmet supporter allows the positions of the first right eye imaging device and the at least one second right eye imaging device to be integrally changeable relative to the helmet, and allows the positions of the first left eye imaging device and the at least one second left eye imaging device to be integrally changeable relative to the helmet.

With this arrangement, the position of the second right eye imaging device is fixed relative to the position of the first right eye imaging device. Furthermore, the position of the second left eye imaging device is fixed relative to the position of the first left eye imaging device. This further makes it easy to perform the process of detecting the directions of lines of sight by using images taken by the first right eye imaging device, the second right eye imaging device, the first left eye imaging device, and the second left eye imaging device. The detection accuracy of detecting the directions of lines of sight of the user can be further improved.

In the present teaching and the embodiments, a concept "positions of a first right eye imaging device and at least one second right eye imaging device are integrally changeable relative to a helmet" indicates that, when the position of the first right eye imaging device is changed relative to the helmet, the position of the at least one second right eye imaging device is changed relative to the helmet, too. The same applied to a concept "positions of a first left eye imaging device and at least one second left eye imaging device are integrally changeable relative to a helmet".

(9) The line-of-sight detecting device of an embodiment of the present teaching may have the following feature in addition to the features of any one of the arrangements (1) to (8).

The helmet supporter is detachably attached to the helmet.

According to this arrangement, when the detection of the directions of lines of sight by the line-of-sight detecting device is unnecessary, the user is able to use a helmet from which the line-of-sight detecting device has been detached.

(10) The line-of-sight detecting device of an embodiment of the present teaching may have the following feature in addition to the features of any one of the arrangements (1) to (9). The helmet includes a shell and a liner provided inside the shell, and the helmet supporter includes a tab that is inserted into a gap between the shell and the liner so as to be in contact with both the shell and the liner.

With this arrangement, because all or part of a process of attaching the helmet supporter to the helmet is insertion of the tab helmet supporter into a gap between the shell and the liner, the helmet supporter can be easily attached to the helmet.

Furthermore, according to the arrangement above, the positions of the first right eye imaging device and the first left eye imaging device can be changed relative to the helmet in a substantially up-down direction for the user, by changing the length of the part provided between the shell and the liner.

In the present teaching and the embodiments, a concept "a helmet supporter includes a tab" is not limited to a case where the helmet supporter includes only one tab. The helmet supporter may include plural tabs. The tabs may be inserted in the same insertion direction. The tabs may include two tabs that are different from each other in the insertion direction. The tabs may include two tabs that are identical with each other in the insertion direction.

(11) The line-of-sight detecting device of an embodiment of the present teaching may have the following feature in addition to the features of the arrangement (10).

The helmet supporter includes a movement suppressor which is configured to suppress the helmet supporter from moving relative to the helmet in a direction opposite to an insertion direction in which the tab is inserted.

According to this arrangement, even if the attachment of the helmet supporter by the tab is loosened due to large or frequent movement of the helmet because of, for example, the vibration of the vehicle on which the user rides vibrates or rapid shaking of the head by the user, the movement suppressor suppresses the helmet supporter from moving relative to the helmet in the direction opposite to the insertion direction of the tab. On this account, it is possible to suppress positional changes of the first right eye imaging device and the first left eye imaging device relative to the helmet, while the line-of-sight detecting device is in use. Due to this, it is possible to further highly precisely detect the directions of lines of sight of users wearing helmets in various situations.

In the present teaching and the embodiments, a concept "a helmet supporter includes a movement suppressor" is not limited to a case where the helmet supporter includes only one movement suppressor. The helmet supporter may include plural movement suppressors.

(12) The line-of-sight detecting device of an embodiment of the present teaching may have the following feature in addition to the features of the arrangement (11).

The movement suppressor is configured to suppress the helmet supporter from moving relative to the helmet in the direction opposite to the insertion direction, in such a way that an end of the movement suppressor in the insertion direction and an end of the movement suppressor in the direction opposite to the insertion direction make contact with the helmet.

With this arrangement, positional displacement of the movement suppressor relative to the helmet is suppressed. Because positional displacement of the movement suppressor relative to the helmet is suppressed, the tab is less likely to move in directions other than the direction opposite to the insertion direction, between the shell and the liner. It is therefore possible to suppress the movement of the helmet supporter relative to the helmet, in all directions.

(13) The line-of-sight detecting device of an embodiment of the present teaching may have the following feature in addition to the features of any one of the arrangements (1) to (12).

The line-of-sight detecting device further comprises light sources which are supported by the helmet supporter and are configured to apply light to the both eyes of the user wearing the helmet.

With this arrangement, because the plural light sources are supported by the helmet supporter, it is possible to fix the positions of the light sources relative to the positions of the first right eye imaging device and the first left eye imaging device. On this account, the directions of lines of sight can be highly precisely detected by utilizing light emitted from the light sources.

(14) The line-of-sight detecting device of an embodiment of the present teaching may have the following feature in addition to the features of any one of the arrangements (1) to (13).

The helmet is a vehicle helmet that is worn when the user rides a vehicle.

The vehicle helmet encompasses helmets for straddled vehicles and vehicle helmets not for straddled vehicles. A straddled vehicle indicates all types of vehicles on which a rider (user) rides in a manner of straddling a saddle. A straddled vehicle helmet encompasses a helmet that is worn by a user who rides, for example, a motorcycle, a scooter, a moped, a motor tricycle, an ATV (All Terrain Vehicle), a snowmobile, or a bicycle. A vehicle helmet not for a straddled vehicle encompasses, for example, a helmet for a racing kart, a helmet for a racing car, a helmet for a rally car, and a helmet for an airplane. The line-of-sight detecting device of the present teaching may be applied to a non-vehicle helmet. The non-vehicle helmet encompasses a sports helmet used for sports and a constructor helmet used in, for example, a factory or a construction site. The sports helmet encompasses, for example, a ski helmet, a baseball helmet, an American football helmet, a rugby helmet, and a helmet for martial arts such as boxing. Each of the rugby helmet and the helmet for martial arts is also known as head gear or hear guard and does not have a shell.

The helmet of the present teaching is mounted on the head of a user to protect the head of the user. The helmet to which the line-of-sight detecting device of the present teaching is attached may or may not include a shell. The helmet to which the line-of-sight detecting device of the present teaching is attached may or may not include a liner.

In the present specification, the end portion of a certain component means a portion obtained by combining the end of the component and the vicinity thereof.

In the present specification, A and/or B means A, B, or both A and B.

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching and the embodiments, terms "including", "comprising", "having", and derivatives thereof are used to encompass not only listed items and equivalents thereof but also additional items.

In the present teaching and the embodiments, the terms "mounted", "connected", "coupled", and "supported" are used in broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this specification and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

As used herein, the term "preferred" is non-exclusive. The term "preferable" means "preferable but not limited to". In this specification, an arrangement which is "preferable" exerts at least the above-described effects of the arrangement of claim 1. In this specification, the term "may" is non-exclusive. "May be" means "may be but not limited to". In the present specification, "may" implicitly encompasses "do not". In this specification, an arrangement which is explained by using the term "may" exerts at least the above-described effects of the arrangement of claim 1.

In the present teaching, the above-described preferable configurations are not limited to be combined with each other. Before describing embodiments of the present teaching in detail, it is to be understood that the present teaching is not limited to the details of construction and arrangement of the components set forth in the following description or illustrated in the drawings. The present teaching is also applicable to embodiments other than the embodiments described later. The present teaching may be implemented as an embodiment other than the below-described embodiment. Furthermore, the present teaching may be implemented by suitably combining below-described embodiments and modifications.

### [Advantageous Effects]

The line-of-sight detecting device of the present teaching makes it possible to highly precisely detect the directions of lines of sight of various users wearing various types of helmets in various situations.

### [Brief Description of Drawings]

FIG. 1 illustrates a line-of-sight detecting device of a First Embodiment of the present teaching.
FIG. 2 illustrates a line-of-sight detecting device of a Second Embodiment of the present teaching.
FIG. 3 is a front view of a line-of-sight detecting device of a Third Embodiment of the present teaching.
FIG. 4 is a top view of the line-of-sight detecting device of the Third Embodiment of the present teaching.
FIG. 5 is a cross section taken along a line A-A in FIG. 3.
FIG. 6(a) is a cross section taken along a line B-B in FIG. 3, whereas FIG. 6(b) is a left side view of the line-of-sight detecting device of the Third Embodiment.
FIG. 7 is a bottom view of the line-of-sight detecting device of the Third Embodiment of the present teaching.
FIG. 8 is a rear view of the line-of-sight detecting device of the Third Embodiment of the present teaching.

### [Description of Embodiments]

### <First Embodiment of Present Teaching>

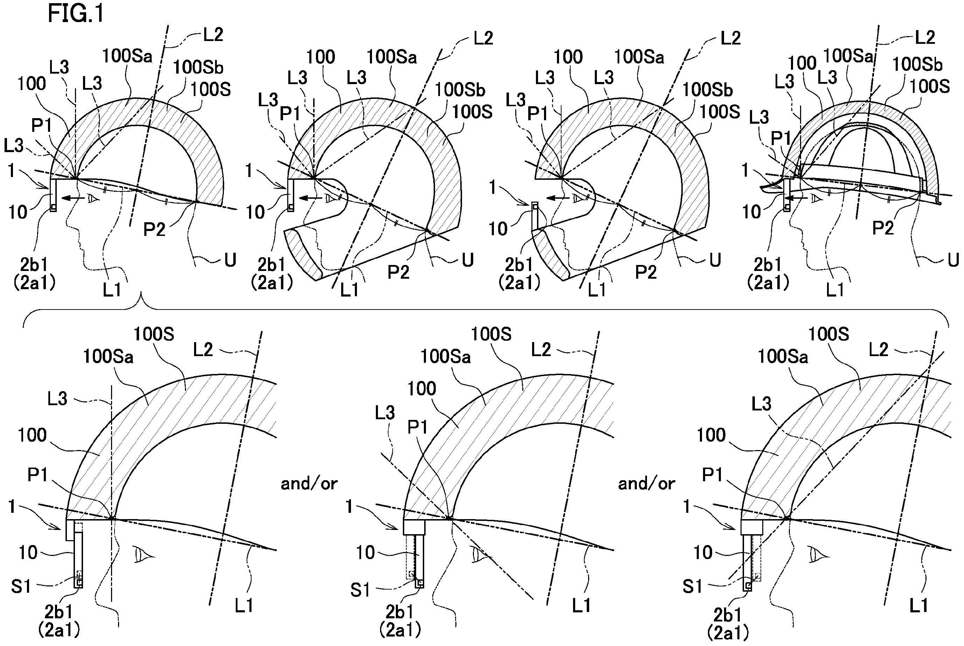

Hereinafter, a First Embodiment of the present teaching will be described with reference to FIG. 1. FIG. 1 shows an example of a line-of-sight detecting device 1 of the First Embodiment, which is attached to each of three types of helmets 100. The types of helmets to which the line-of-sight detecting device of the present teaching is attached are not limited to the types of the helmets 100 shown in FIG. 1. The line-of-sight detecting device 1 includes a first right eye imaging device 2a1, a first left eye imaging device 2b1, and a helmet supporter 10. The first right eye imaging device 2a1 is configured to image the right eye of a user U in order to detect the direction of line of sight of the right eye of the user U. The first left eye imaging device 2b1 is configured to image the left eye of the user U in order to detect the direction of line of sight of the left eye of the user U. The helmet supporter 10 is supported by the helmet 100 worn by the user U and supports the first right eye imaging device 2a1 and the first left eye imaging device 2b1. The helmet supporter 10 is supported by the helmet 100 worn by the user U and supports the first right eye imaging device 2a1 and the first left eye imaging device 2b1 so that the positions of the first right eye imaging device 2a1 and the first left eye imaging device 2b1 are changeable relative to the helmet 100. FIG. 1 is a schematic diagram that schematically shows the arrangement of the helmet supporter 10.

FIG. 1 shows a helmet vertical cross section 100S of the helmet 100. The helmet vertical cross section 100S is a cross section of the helmet 100, which is cut along a direction orthogonal to the left-right direction of the helmet 100. The helmet vertical cross section 100S is a hatched region. The helmet vertical cross section 100S may not be a plane at the center of the helmet 100 in the left-right direction. A point that is in a part in contact with the frontal region of the user U in the helmet vertical cross section 100S and is farthest from the parietal region of the user U is referred to as a first end point P1. A point that is in a part in contact with the occipital region or the regio cervicalis posterior of the user U in the helmet vertical cross section 100S and is farthest from the parietal region of the user U is referred to as a second end point P2. A straight line passing through the first end point P1 and the second end point P2 is referred to as a first straight line L1. A straight line which passes through a point equidistant from the first end point P1 and the second end point P2 and on the first straight line L1 and which is orthogonal to both the left-right direction of the helmet 100 and the first straight line L1 is referred to as a second straight line L2. In the helmet vertical cross section 100S, a portion which includes a part in contact with the frontal region of the user U and has the first straight line L1 and the second straight line L2 as boundaries is referred to as a helmet front upper portion 100Sa. In the helmet vertical cross section 100S, a portion which is connected to the helmet front upper portion 100Sa at the second straight line L2 and has the first straight line L1 and the second straight line L2 as boundaries is referred to as a helmet rear upper portion 100Sb.

The helmet supporter 10 allows the positions of the first right eye imaging device 2a1 and the first left eye imaging device 2b1 to be changeable relative to the helmet 100 so that a line segment S1 connecting each of the positions of the first right eye imaging device 2a1 and the first left eye imaging device 2b1 before the change with the position of the corresponding device after the change is in parallel to a third straight line L3 which passes through the first end point P1 and the helmet front upper portion 100Sa and does not pass through the helmet rear upper portion 100Sb when viewed in the left-right direction of the helmet 100. FIG. 1 shows plural examples of the third straight line L3. The third straight line L3 is not limited to those shown in FIG. 1. According to the arrangement above, the helmet supporter 10 allows the positions of the first right eye imaging device 2a1 and the first left eye imaging device 2b1 to be changeable relative to the helmet 100, in a direction in parallel to the third straight line L3 when viewed in the left-right direction of the helmet 100. For this reason, the line-of-sight detecting device 1 makes it possible to highly precisely detect the directions of lines of sight of various users U wearing various types of helmets 100 in various situations.

The helmet supporter 10 may or may not allow the positions of the first right eye imaging device 2a1 and the first left eye imaging device 2b1 to be changeable relative to the helmet 100, in a direction in parallel to plural third straight lines L3 when viewed in the left-right direction of the helmet 100. The helmet supporter 10 may or may not have a portion that is positionally unchanged relative to the helmet 100 when the positions of the first right eye imaging device 2a1 and the first left eye imaging device 2b1 are changed relative to the helmet 100 so that the line segment S1 is in parallel to the third straight line L3.

The helmet supporter 10 may allow the positions of the first right eye imaging device 2a1 and the first left eye imaging device 2b1 to be changeable relative to the helmet 100 so that the first right eye imaging device 2a1 and the first left eye imaging device 2b1 move in a direction in parallel to the third straight line L3 when viewed in the left-right direction of the helmet 100. In this case, the locus of movement of each of the first right eye imaging device 2a1 and the first left eye imaging device 2b 1 when viewed in the left-right direction of the helmet 100 coincides with the line segment S1. The helmet supporter 10 may allow the positions of the first right eye imaging device 2a1 and the first left eye imaging device 2b1 to be changeable relative to the helmet 100 so that the first right eye imaging device 2a1 and the first left eye imaging device 2b1 move in a direction in parallel to the third straight line L3. To put it differently, the helmet supporter 10 may allow the first right eye imaging device 2a1 and the first left eye imaging device 2b1 to be movable relative to the helmet 100 in a direction orthogonal to the left-right direction of the helmet 100.

The helmet supporter 10 may allow the positions of the first right eye imaging device 2a1 and the first left eye imaging device 2b1 to be changeable relative to the helmet 100 so that each of the first right eye imaging device 2a1 and the first left eye imaging device 2b1 moves relative to the helmet 100 along a curved locus when viewed in the left-right direction of the helmet 100 and the line segment S1 connecting each of the positions of the first right eye imaging device 2a1 and the first left eye imaging device 2b1 before the change with the position of the corresponding device after the change is in parallel to the third straight line L3 when viewed in the left-right direction. The curved locus may or may not be arc-shaped. For example, the curvature of the curved locus may gradually change.

### <Second Embodiment of Present Teaching>

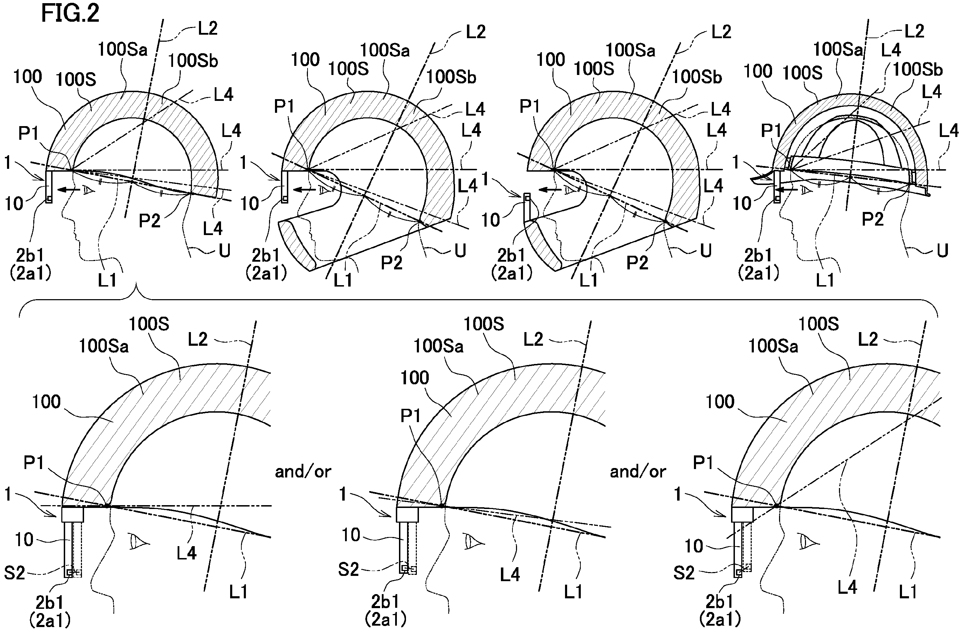

Hereinafter, a Second Embodiment of the present teaching will be described with reference to FIG. 2. The line-of-sight detecting device 1 of the Second Embodiment includes the following arrangements, in addition to those of the First Embodiment.

The helmet supporter 10 allows the positions of the first right eye imaging device 2a1 and the first left eye imaging device 2b1 to be changeable relative to the helmet 100 so that a line segment S2 connecting each of the positions of the first right eye imaging device 2a1 and the first left eye imaging device 2b1 before the change with the position of the corresponding device after the change is in parallel to a fourth straight line L4 which passes through the first end point P1 and the helmet rear upper portion 100Sb and does not pass through the helmet front upper portion 100Sa when viewed in the left-right direction. This positional change is not performed simultaneously with the positional change described in the First Embodiment. FIG. 2 shows plural examples of the fourth straight line L4. The fourth straight line L4 is not limited to those shown in FIG. 2. The number of fourth straight lines L4 for one helmet supporter 10 may be one or plural. According to the arrangement above, the helmet supporter 10 allows the positions of the first right eye imaging device 2a1 and the first left eye imaging device 2b1 to be changeable relative to the helmet 100, in a direction in parallel to the fourth straight line L4 when viewed in the left-right direction of the helmet 100. For this reason, the line-of-sight detecting device 1 makes it possible to highly precisely detect the directions of lines of sight of various users U wearing various types of helmets 100 in various situations.

The helmet supporter 10 may or may not allow the positions of the first right eye imaging device 2a1 and the first left eye imaging device 2b1 to be changeable relative to the helmet 100, in a direction in parallel to plural fourth straight lines L4 when viewed in the left-right direction of the helmet 100. The helmet supporter 10 may or may not have a portion that is positionally unchanged relative to the helmet 100 when the positions of the first right eye imaging device 2a1 and the first left eye imaging device 2b1 are changed relative to the helmet 100 so that the line segment S2 is in parallel to the fourth straight line L4.

The helmet supporter 10 may allow the positions of the first right eye imaging device 2a1 and the first left eye imaging device 2b1 to be changeable relative to the helmet 100 so that the first right eye imaging device 2a1 and the first left eye imaging device 2b1 move in parallel to the fourth straight line L4 when viewed in the left-right direction of the helmet 100. In this case, the locus of movement of each of the first right eye imaging device 2a1 and the first left eye imaging device 2b1 when viewed in the left-right direction of the helmet 100 coincides with the line segment S2. The helmet supporter 10 may allow the positions of the first right eye imaging device 2a1 and the first left eye imaging device 2b1 to be changeable relative to the helmet 100 so that the first right eye imaging device 2a1 and the first left eye imaging device 2b1 move in parallel to the fourth straight line L4. To put it differently, the helmet supporter 10 may allow the first right eye imaging device 2a1 and the first left eye imaging device 2b1 to be movable relative to the helmet 100 in a direction orthogonal to the left-right direction of the helmet 100.

The helmet supporter 10 may allow the positions of the first right eye imaging device 2a1 and the first left eye imaging device 2b1 to be changeable relative to the helmet 100 so that each of the first right eye imaging device 2a1 and the first left eye imaging device 2b1 moves relative to the helmet 100 along a curved locus when viewed in the left-right direction of the helmet 100 and the line segment S2 connecting each of the positions of the first right eye imaging device 2a1 and the first left eye imaging device 2b1 before the change with the position of the corresponding device after the change is in parallel to the fourth straight line L4. The curved locus may or may not be arc-shaped. For example, the curvature of the curved locus may gradually change.

### <Third Embodiment of Present Teaching>

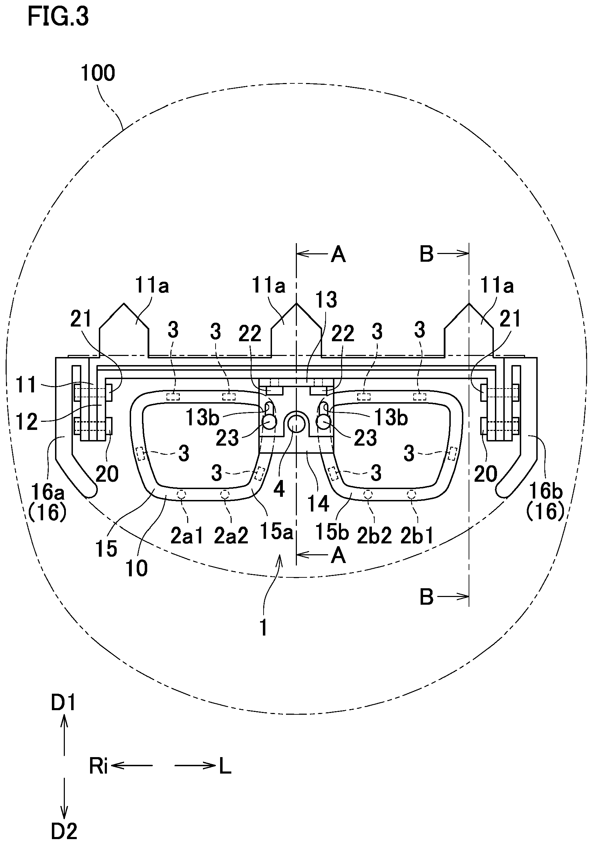

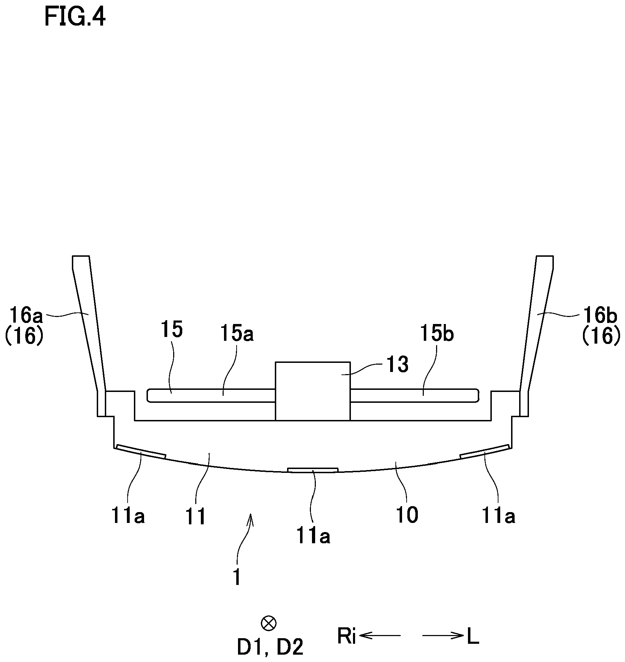

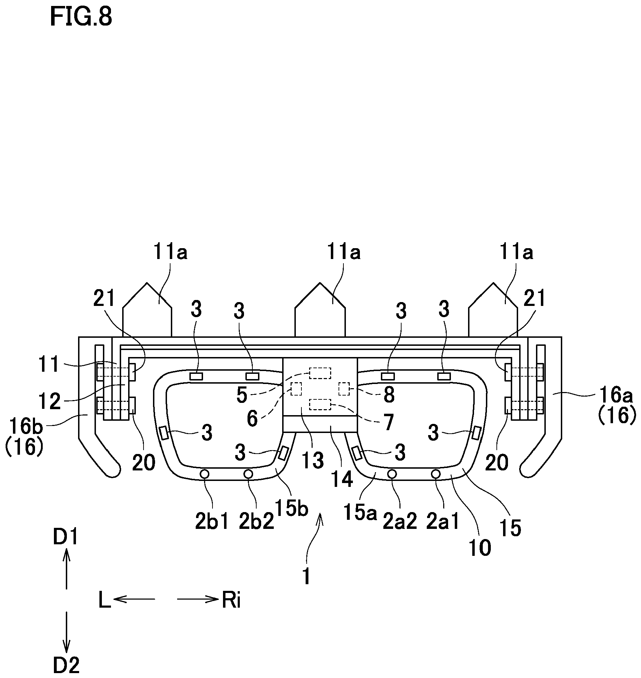

The following will describe a Third Embodiment of the present teaching with reference to FIG. 3 to FIG. 8. The line-of-sight detecting device 1 of the Third Embodiment includes the following arrangements, in addition to those of the First Embodiment and the Second Embodiment. The reference signs Ri and L in FIGs. 3 to 7 indicate the rightward direction from the helmet 100 and the leftward direction from the helmet 100. Hereinafter, a left-right direction is equivalent to the left-right direction of the helmet 100, unless otherwise stated. The line-of-sight detecting device 1 is provided at a front portion of the helmet 100. The helmet supporter 10 of the line-of-sight detecting device 1 is detachably attached to the helmet 100. The helmet supporter 10 is preferably arranged not to come into view for the user U. The helmet supporter 10 may be arranged to partially come into view for the user U. The helmet supporter 10 includes a first supporting portion 11, a second supporting portion 12, a third supporting portion 13, a fourth supporting portion 14, a fifth supporting portion 15, and two movement suppressors 16. The fifth supporting portion 15 supports the first right eye imaging device 2a1, at least one second right eye imaging device 2a2, the first left eye imaging device 2b 1, and at least one second left eye imaging device 2b2. Although FIG. 3 and FIG. 8 show only one second right eye imaging device 2a2, the number of the devices may be plural. Although FIG. 3 and FIG. 8 show only one second left eye imaging device 2b2, the number of the devices may be plural. The line-of-sight detecting device 1 may not include the second right eye imaging device 2a2 and the second left eye imaging device 2b2. Hereinafter, the first right eye imaging device 2a1, the second right eye imaging device 2a2, the first left eye imaging device 2b1, and the second left eye imaging device 2b2 will be collectively termed an eye imaging device 2 (the reference number is not shown in the drawings), when the devices are not distinguished from each other. Furthermore, hereinafter, the first right eye imaging device 2a1 and the second right eye imaging device 2a2 will be collectively termed a right eye imaging device 2a (the reference number is not shown in the drawings), when the devices are not distinguished from each other. Meanwhile, the first left eye imaging device 2b1 and the second left eye imaging device 2b2 will be collectively termed a left eye imaging device 2b (the reference number is not shown in the drawings), when the devices are not distinguished from each other. The fifth supporting portion 15 is supported by the fourth supporting portion 14. The fourth supporting portion 14 is supported by the third supporting portion 13. The third supporting portion 13 is supported by the second supporting portion 12. The second supporting portion 12 is supported by the first supporting portion 11. The first supporting portion 11 is supported by the helmet 100. The first supporting portion 11 is supported by the helmet 100 so that the left-right direction of the first supporting portion 11 coincides with the left-right direction of the helmet 100. The left-right direction of the first supporting portion 11 is a direction of fixation to the first supporting portion 11. The two movement suppressors 16 are connected to the first supporting portion 11. The two movement suppressors 16 are a right movement suppressor 16a provided at a right portion of the helmet 100 and a left movement suppressor 16b provided at a left portion of the helmet 100.

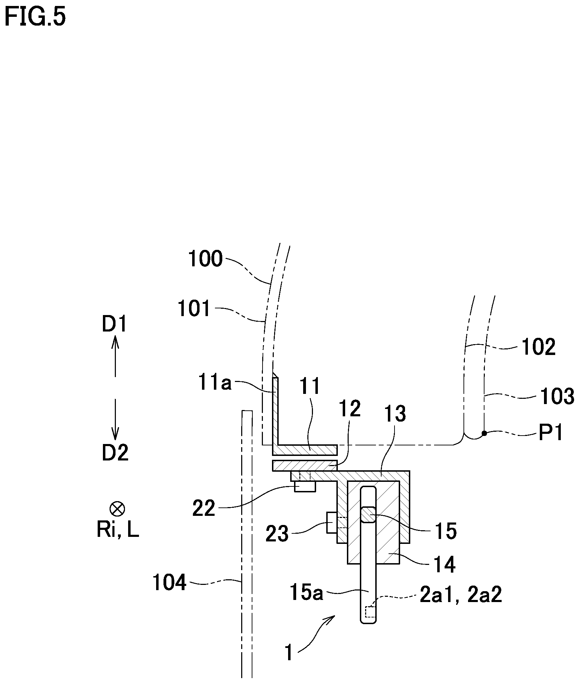

The first supporting portion 11 has plural tabs 11a. The tabs 11a are provided to attach the line-of-sight detecting device 1 to the helmet 100. As shown in FIG. 5, the helmet 100 includes a shell 101 and a liner 102 provided inside the shell 101. The liner 102 is in contact with the inner surface of the shell 101. The shell 101 may be formed of plural layers or a single layer. The liner 102 is softer than the shell 101. The liner 102 is softer than the tabs 11a. The liner 102 includes, for example, a foamed material. The liner 102 may be formed of plural layers or a single layer. The helmet 100 further includes an interior material 103 provided inside the liner 102. The first end point P1 (see FIG. 1) and the second end point P2 (see FIG. 2) are in the interior material 103. As shown in FIG. 5, the tabs 11a are inserted into a portion of the helmet 100, which covers the frontal region of the user U. The tabs 11a are inserted into gaps between the shell 101 and the liner 102 to be in contact with both the shell 101 and the liner 102. Each of the tabs 11a is inserted in a direction that is substantially upward for the user U. A direction in parallel to the insertion direction of one of the tabs 11a in which the tab is inserted is referred to as a direction D1. The insertion direction of each of the remaining tabs 11a is identical or nearly identical with the direction D1. The direction opposite to the direction D1 is referred to as a direction D2. As the tabs 11a are inserted, the helmet supporter 10 is attached to the helmet 100. Because all or part of a process of attaching the helmet supporter 10 to the helmet 100 is insertion of the tabs 11a into a gap between the shell 101 and the liner 102, the helmet supporter 10 can be easily attached to the helmet 100. The tabs 11a are provided between the curved surface of the shell 101 and the curved surface of the liner 102. On this account, positional displacement of the tabs 11a is unlikely to occur.

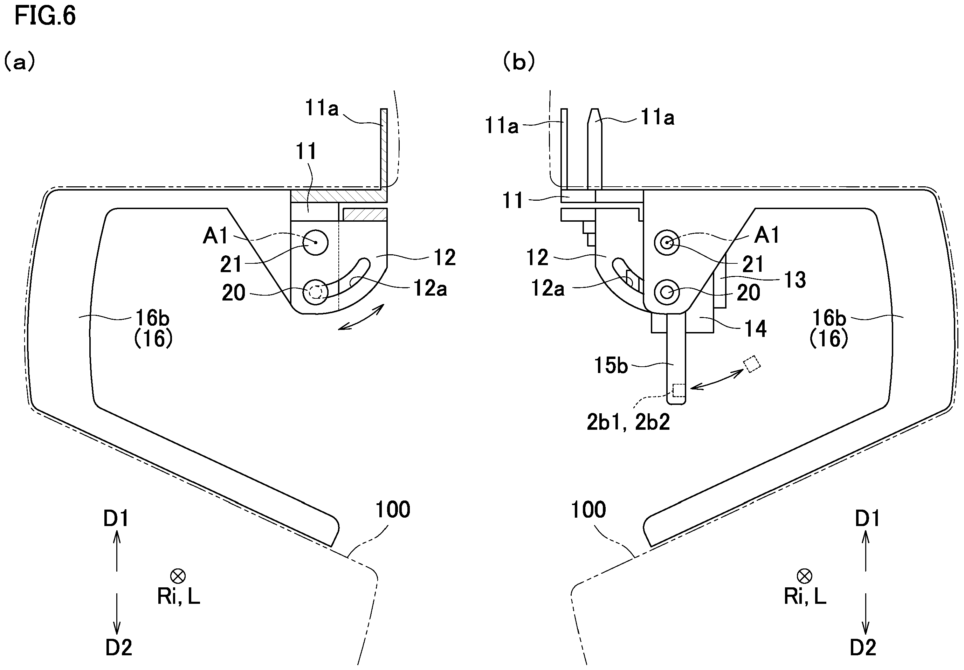

As shown in FIG. 3, a right end portion of the first supporting portion 11, a right end portion of the second supporting portion 12, and the right movement suppressor 16a are fixed to one another by two screw pins 20 and 21. A left end portion of the first supporting portion 11, a left end portion of the second supporting portion 12, and the left movement suppressor 16b are fixed to one another by two screw pins 20 and 21. The screw pins 20 and 21 are included in the helmet supporter 10. As shown in FIG. 6, the second supporting portion 12 has an arc-shaped hole 12a penetrated by each screw pin 20. The arc-shaped hole 12a is shaped as an arc centered on the pin 21 when viewed in the left-right direction. As the two screw pins 20 and the two screw pins 21 are loosened, the second supporting portion 12 becomes movable along the arc-shaped hole 12a relative to the first supporting portion 11. The second supporting portion 12 is therefore swingable relative to the first supporting portion 11, about an axial line A1 that is parallel to the left-right direction. Each of the third supporting portion 13 supported by the second supporting portion 12 and the fifth supporting portion 15 supported by the fourth supporting portion 14 is also swingable about the axial line A1 relative to the first supporting portion 11. On this account, the first right eye imaging device 2a1 and the first left eye imaging device 2b1 are swingable about the axial line A1 relative to the helmet 100. As the first right eye imaging device 2a1 and the first left eye imaging device 2b 1 swing about the axial line A1 relative to the helmet 100, the direction of imaging performed by the first right eye imaging device 2a1 and the first left eye imaging device 2b1 is changed relative to the helmet 100. In the helmet supporter 10, portions (the second supporting portion 12, the third supporting portion 13, the fourth supporting portion 14, and the fifth supporting portion 15) that swing about the axial line A1 together with the first right eye imaging device 2a1 and the first left eye imaging device 2b1 are supported by a portion (first supporting portion 11) of the helmet supporter 10, which does not swing about the axial line A1 together with the first right eye imaging device 2a1 and the first left eye imaging device 2b1, by means of a member (pin 21) positionally overlapping the axial line A1 and a member (pin 20) detached from the axial line A1.

The movement suppressors 16 suppress the helmet supporter 10 from moving in the direction D2 (i.e., the direction opposite to the insertion direction) relative to the helmet 100. An end in the direction D2 of each movement suppressor 16 and an end in the direction D1 of each movement suppressor 16 are in contact with the helmet 100. On this account, positional displacement of the movement suppressors 16 relative to the helmet 100 is suppressed. The end in the direction D2 of each movement suppressor 16 is in contact with the end in the direction D1 of a portion covering the cheek of the user U. The end in the direction D1 of each movement suppressor 16 is in contact with the end in the direction D2 of a portion covering the frontal region or the temple of the user U.

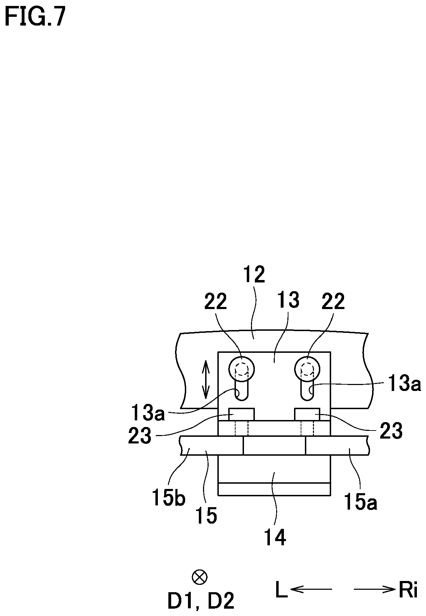

As shown in FIG. 3, a central portion in the left-right direction of the second supporting portion 12 is fixed to the third supporting portion 13 by two screw pins 22. The two screw pins 22 are included in the helmet supporter 10. As shown in FIG. 7, the third supporting portion 13 has long holes 13a each penetrated by the screw pin 22. Each long hole 13a is long in shape substantially in the front-rear direction for the user U. Each long hole 13a is long in the direction orthogonal to both the direction D1 and the left-right direction. As the two screw pins 22 are loosened, the third supporting portion 13 becomes movable along the long holes 13a relative to the second supporting portion 12. The third supporting portion 13 is therefore movable relative to the second supporting portion 12 in the direction orthogonal to both the direction D1 and the left-right direction. The direction orthogonal to both the direction D1 and the left-right direction is in parallel to the fourth straight line L4 of the Second Embodiment (see FIG. 2). The third supporting portion 13 is movable in a direction in parallel to the fourth straight line L4 relative to the second supporting portion 12. The fourth supporting portion 14 supported by the third supporting portion 13 and the fifth supporting portion 15 are also movable in the direction parallel to the fourth straight line L4 relative to the second supporting portion 12. On this account, the first right eye imaging device 2a1 and the first left eye imaging device 2b1 are movable in the direction in parallel to the fourth straight line L4 relative to the helmet 100.

As shown in FIG. 3 and FIG. 5, the third supporting portion 13 is fixed to the fourth supporting portion 14 by two screw pins 23. The two screw pins 23 are included in the helmet supporter 10. As shown in FIG. 3, the third supporting portion 13 has long holes 13b each penetrated by the screw pin 23. Each long hole 13b is long in shape substantially in the up-down direction for the user U. Each long hole 13b is long in the direction D1. As the two screw pins 23 are loosened, the fourth supporting portion 14 becomes movable along the long holes 13b relative to the third supporting portion 13. The fourth supporting portion 14 is therefore movable in the direction D1 relative to the third supporting portion 13. The direction D1 is in parallel to the third straight line L3 of the First Embodiment (see FIG. 1). The fourth supporting portion 14 is movable in a direction in parallel to the third straight line L3 relative to the third supporting portion 13. The fifth supporting portion 15 supported by the fourth supporting portion 14 is movable in a direction in parallel to the third straight line L3 relative to the third supporting portion 13. On this account, the first right eye imaging device 2a1 and the first left eye imaging device 2b1 are movable in the direction in parallel to the third straight line L3 relative to the helmet 100.

As shown in FIG. 5 and FIG. 7, the fourth supporting portion 14 is arranged to sandwich the fifth supporting portion 15 substantially in the front-rear direction for the user U. It is noted that FIG. 5 and FIG. 7 schematically show cross sections of the fourth supporting portion 14 and the fifth supporting portion 15. The fourth supporting portion 14 and the fifth supporting portion 15 are fixed to each other by, for example, an unillustrated screw pin. The fourth supporting portion 14 and the fifth supporting portion 15 are arranged so that the fifth supporting portion 15 is movable in the left-right direction relative to the fourth supporting portion 14 when the fixation state is canceled. The first right eye imaging device 2a1 and the first left eye imaging device 2b1 are therefore movable in the left-right direction relative to the helmet 100.

As shown in FIG. 8, the fifth supporting portion 15 has two annular frames 15a and 15b. The two frames 15a and 15b are formed and disposed so that the two frames 15a and 15b surround the right eye and the left eye of the user U, respectively, when the user U wearing the helmet 100 is viewed from the front. As shown in FIG. 3 and FIG. 8, the fifth supporting portion 15 supports plural eye imaging devices 2 and plural light sources 3. On this account, the positions of the light sources 3 are fixed relative to the eye imaging devices 2. The frame 15a supports plural right eye imaging devices 2a (2a1 and 2a2) and at least one light source 3. The frame 15b supports plural left eye imaging devices 2b (2b 1 and 2b2) and at least one light source 3.

As shown in FIG. 3, the line-of-sight detecting device 1 includes a scene imaging device 4 supported by the fourth supporting portion 14. As shown in FIG. 8, the line-of-sight detecting device 1 includes a position detector 5, a wireless communication device 6, a processor 7, and a storage unit 8 that are supported by the fourth supporting portion 14. Furthermore, the line-of-sight detecting device 1 includes an unillustrated power source (e.g., battery) supported by the fourth supporting portion 14. The position detector 5, the wireless communication device 6, the processor 7, and the storage unit 8 shown in FIG. 8 merely show these devices 5, 6, 7, and 8 schematically. The positions and shapes of the devices 5, 6, 7, and 8 are not limited to those shown in FIG. 3.

The light sources 3 apply light to the eyes of the user U wearing the helmet 100. The at least one light source 3 attached to the frame 15a applies light to the right eye of the user U. The at least one light source 3 attached to the frame 15b applies light to the left eye of the user U. The light sources 3 may be infrared light emitters configured to emit infrared light. The light sources 3 may emit light that is not infrared light. The light sources 3 may emit visible light. The number and positions of the light sources 3 are not limited to those of the light sources 3 shown in FIG. 3.

The first right eye imaging device 2a1 and at least one second right eye imaging device 2a2 are provided so that the right eye of the user U wearing the helmet 100 is imaged by the devices. The first left eye imaging device 2b1 and at least one second left eye imaging device 2b2 are provided so that the left eye of the user U wearing the helmet 100 is imaged by the devices. The eye imaging device 2 has one imaging element. The eye imaging device 2 is, for example, a camera. The eye imaging device 2 may be a camera with a lens or a lensless camera. The camera is an apparatus configured to generate image data by photoelectrically converting an optical image of a subject with an imaging element. The imaging element (image sensor) is, for example, a complementary metal oxide semiconductor (CMOS) sensor or a charge coupled device (CCD) sensor. The eye imaging device 2 may be capable of generating only still image data or may be capable of generating moving image data. The positions of the eye imaging devices 2 are not limited to the positions shown in FIG. 3 and FIG. 8. Although the eye imaging devices 2 are provided below the eyes of the user U in FIG. 3 and FIG. 8, the devices may be provided above the eyes of the user U. It is noted that this "below" indicates "below" in the up-down direction for the user U. The same applies to the "above".

The scene imaging device 4 is configured to image a scene visually perceived by the user U wearing the helmet 100. The scene imaging device 4 is, for example, a camera. The scene imaging device 4 may be capable of generating only still image data or may be capable of generating moving image data.

The position detector 5 is configured to detect positional changes of the line-of-sight detecting device 1. The position detector 5 is therefore capable of detecting the movement of the head of the user U wearing the helmet 100. The movement of the head detected by the position detector 5 includes the movement of the head of the user U together with the body of the user U. The position detector 5 may include, for example, a triaxial gyro sensor and a triaxial accelerometer. The triaxial gyro sensor is configured to detect rotational angular speed about three axes that are orthogonal to one another. The triaxial accelerometer is configured to detect acceleration in the directions of three axes that are orthogonal to one another. The position detector 5 may include only the triaxial gyro sensor or the triaxial accelerometer. The position detector 5 may include another sensor in addition to the triaxial gyro sensor and the triaxial accelerometer.

The processor 7 is connected to the eye imaging devices 2, the light sources 3, the scene imaging device 4, the position detector 5, the wireless communication device 6, and the storage unit 8. The processor 7 is, for example, a CPU (Central Processing Unit), a GPU (Graphics Processing Unit), a micro processor, or a multi processor. Examples of the storage unit 8 include a ROM (Read Only Memory) and a RAM (Random Access Memory). The processor 7 executes a process based on a program and data stored in the storage unit 8. The processor 7 is configured to control the eye imaging devices 2, the light sources 3, the scene imaging device 4, and the wireless communication device 6.

The processor 7 is configured to receive data detected by the eye imaging devices 2, the scene imaging device 4, and the position detector 5. The processor 7 stores, in the storage unit 8, the data obtained from the devices 2, 4, and 5 and/or data generated by the processor 7 based on the data obtained from the devices 2, 4, and 5. The processor 7 transmits, from the wireless communication device 6, the data obtained from the devices 2, 4, and 5 and/or the data generated by the processor 7 based on the data obtained from the devices 2, 4, and 5. The below-described processes executed by the processor 7 may be executed by a device having received data from the wireless communication device 6.

The processor 7 is configured to detect the directions of the lines of sight of the both eyes of the user U wearing the helmet 100 by analyzing images (data) of the eyes imaged (detected) by the eye imaging devices 2. For example, the processor 7 detects the directions of the lines of sight of the both eyes of the user U by analyzing images of the eyes imaged by the first right eye imaging device 2a1 and the first left eye imaging device 2b1. The processor 7 detects the direction of the line of sight of the right eye at a certain moment based on an image of the right eye imaged by one right eye imaging device 2a among the right eye imaging devices 2a (2a1 and 2a2). The processor 7 may detect the direction of the line of sight of the right eye at a certain moment based on images of the right eye imaged by all or some right eye imaging devices 2a among the right eye imaging devices 2a (2a1 and 2a2). The processor 7 detects the direction of the line of sight of the left eye at a certain moment based on an image of the left eye imaged by one left eye imaging device 2b among the left eye imaging devices 2b (2b1 and 2b2). The processor 7 may detect the direction of the line of sight of the left eye at a certain moment based on images of the left eye imaged by all or some left eye imaging devices 2b among the left eye imaging device 2b (2b1 and 2b2).

When the light source 3 is an infrared light emitter, the direction of the line of sight may be detected by, for example, a corneal reflection method or a sclera reflection method. With the corneal reflection method or the sclera reflection method, the direction of a line of sight is detected by utilizing infrared light reflected on an eyeball. According to the corneal reflection method, the position of the pupil and the position of the light reflected on the surface of the cornea (i.e., a Purkinj e image) are detected based on an image of the eye. Based on these detection results, the direction of the line of sight is detected. Examples of a method of detecting the position of a pupil based on an image of an eye include bright pupil tracking and dark pupil tracking. According to the bright pupil tracking, the lens optical axis (imaging direction) of the eye imaging device 2 and the optical axis of the light source 3 are moved close to each other so that a part of the image of the eye, which corresponds to the pupil, is brighter than the iris. According to the dark pupil tracking, the lens optical axis (imaging direction) of the eye imaging device 2 and the optical axis of the light source 3 are moved away from each other so that a part of the image of the eye, which corresponds to the pupil, is darker than the iris. For example, either the bright pupil tracking or the dark pupil tracking may be selected in accordance with, for example, the color of the iris of the user U. The sclera reflection method is a method utilizing the fact that a cornea and a sclera (white of the eye) are different in optical reflectance. According to the sclera reflection method, the direction of a line of sight is detected by measuring changes of an amount of light reflected on the eye by the eye imaging device 2. Alternatively, the direction of a line of sight may be detected by detecting the pupil or iris from an image of the eye taken by the eye imaging device 2. Based on the detected directions of the lines of sight of the both eyes, the processor 7 detects the viewpoint of the user U. Based on the detected directions of the lines of sight of the both eyes and an image taken by the scene imaging device 4, the processor 7 specifies the viewpoint of the user U in the image taken by the scene imaging device 4.

The processor 7 is configured to obtain data of the movement of the head of the user U wearing the helmet 100, from the position detector 5. The processor 7 may correct a positional deviation of the line-of-sight detecting device 1 performing measurement, based on data acquired from the position detector 5. The detected movement of the head and the detected direction of the line of sight may be used for estimating an effective field of view of the user U. As a method of estimating an effective field of view of the user U, a known method disclosed in Japanese Laid-Open Patent Publication No. 2019-34723 may be employed, for example. The calculation process for estimating the effective field of view may be performed by the processor 7 of the line-of-sight detecting device 1.

As shown in FIG. 5, the helmet 100 includes a shield 104. The lines of sight of the user U wearing the helmet 100 pass through the shield 104. When the light source 3 is an infrared light emitter, the shield 104 may have a function of blocking infrared light. For example, the shield 104 may be provided with an infrared light blocking film. The infrared light blocking film may be pasted onto the shield 104 or vapor-deposited on the shield 104, for example. The shield 104 having a function of blocking infrared light is able to block infrared light included in solar light. On this account, even when the line-of-sight detecting device 1 is used in an environment with solar light, all of or almost all of infrared light reaching the eyes of the user U is infrared light emitted from the infrared light emitter 3 (light source 3). When the direction of a line of sight is detected by utilizing infrared light reflected on an eyeball, the detection accuracy is improved.

After the user U wears the helmet 100 and before the line-of-sight detecting device 1 starts the detection of the directions of lines of sight of the user U, the positions of the eye imaging devices 2 relative to the helmet 100 are adjusted. The positions of the eye imaging devices 2 are adjusted relative to the helmet 100 so that the eyes of the user U wearing the helmet 100 are located within imaging ranges of the eye imaging devices 2. After the adjustment of the positions of the eye imaging devices 2, calibration is performed. By the calibration, a correction coefficient corresponding to unique characteristics of the user U such as the positions, shapes, and optical characteristics of the eyes of the user U is calculated. This correction coefficient is used for detecting the direction of a line of sight. By the calibration, furthermore, the correspondence between an image taken by the scene imaging device 4 and the viewpoint of the user U is specified. A such, the adjustment of the positions of the eye imaging devices 2 and the calibration make it possible to improve the detection accuracy of the direction of a line of sight and the specific accuracy of the viewpoint in the image taken by the scene imaging device 4.

When the user U wears goggles, the goggles may have a function of blocking infrared light. For example, an infrared light blocking film may be provided. The method of providing the infrared light blocking film is identical with the above-described method. The goggles are provided with an elastic band, and the band is attached to be in contact with the outer surface of the helmet 100. The goggles therefore cover the frames 15a and 15b of the line-of-sight detecting device 1.

When the user U wearing the helmet puts the goggles on, the goggles may have plural eye imaging devices 2. This arrangement is not encompassed in the present teaching. The goggles may include plural light sources 3. The goggles may include one or more of the scene imaging device 4, the position detector 5, the wireless communication device 6, the processor 7, and the storage unit 8.

Modifications of the embodiments of the present teaching will be described below.

### «Modification 1 of Shape of Helmet Supporter»

According to the Third Embodiment, the fifth supporting portion 15 is connected to only the central portion in the left-right direction of the third supporting portion 13 through the fourth supporting portion 14. Alternatively, the fifth supporting portion 15 may be connected to the third supporting portion 13 through two fourth supporting portions that are separated from each other in the left-right direction. The scene imaging device 4, the position detector 5, the wireless communication device 6, the processor 7, the storage unit 8, and the power source are provided at one or both of the two fourth supporting portions. The two fourth supporting portions are electrically connected to each other by a wire or by wireless.

### «Modification 2 of Shape of Helmet Supporter»

The helmet supporter 10 of the Third Embodiment includes the two annular frames 15a and 15b that are disposed to surround the right eye and the left eye of the user U, respectively, when the user U wearing the helmet 100 is viewed from the front. In this regard, the helmet supporter of the line-of-sight detecting device of the present teaching may not include two annular parts that are disposed to surround the right eye and the left eye of the user U, respectively, when viewed in a particular direction. For example, a right end portion may be omitted from the frame 15a, and a left end portion may be omitted from the frame 15b. For example, a right end portion and an upper portion may be omitted from the frame 15a, and a left end portion and an upper portion may be omitted from the frame 15b.

### <<Modification 1 of Adjustment of Positions of First Right Eye Imaging Device and First Left Eye Imaging Device>>

According to the Third Embodiment, the relative positions of the first right eye imaging device 2a1 and the first left eye imaging device 2b1 are not changeable. Alternatively, the helmet supporter of the present teaching may allow the relative positions of the first right eye imaging device and the first left eye imaging device to be changeable. In other words, the helmet supporter of the present teaching may allow the position of each of the first right eye imaging device and the first left eye imaging device to be changeable relative to the helmet. For example, the relative positions of the first right eye imaging device and the first left eye imaging device may be changeable in the left-right direction of the helmet. In addition, the helmet supporter of the present teaching may be switchable between a state in which the position of each of the first right eye imaging device and the first left eye imaging device is individually changeable relative to the helmet and a state in which the positions of the first right eye imaging device and the first left eye imaging device are integrally changeable relative to the helmet.

### «Modification 2 of Adjustment of Positions of First Right Eye Imaging Device and First Left Eye Imaging Device»

According to the Third Embodiment, the relative positions of the first right eye imaging device 2a1 and the second right eye imaging device 2a2 are not changeable. Furthermore, the relative positions of the first left eye imaging device 2b1 and the second left eye imaging device 2b2 are not changeable. Alternatively, the helmet supporter of the present teaching may allow the relative positions of the first right eye imaging device and the second right eye imaging device to be changeable. In other words, the helmet supporter may allow the position of each of the first right eye imaging device and the second right eye imaging device to be changeable relative to the helmet. For example, the relative positions of the first right eye imaging device and the second right eye imaging device may be changeable in the left-right direction of the helmet. The relative positions of the first right eye imaging device and the first left eye imaging device may be changeable in a direction in parallel to the third straight line or the fourth straight line when viewed in the left-right direction of the helmet. Being similar to the right eye imaging devices, the helmet supporter of the present teaching may allow the relative positions of the first left eye imaging device and the second left eye imaging device to be changeable. In other words, the helmet supporter of the present teaching may allow the position of each of the first left eye imaging device and the second left eye imaging device to be changeable relative to the helmet.

In addition, the helmet supporter of the present teaching may be switchable between a state in which the position of each of the first right eye imaging device and the second right eye imaging device is individually changeable relative to the helmet and a state in which the positions of the first right eye imaging device and the second right eye imaging device are integrally changeable relative to the helmet. In addition, the helmet supporter of the present teaching may be switchable between a state in which the position of each of the first left eye imaging device and the second left eye imaging device is individually changeable relative to the helmet and a state in which the positions of the first left eye imaging device and the second left eye imaging device are integrally changeable relative to the helmet.

### «Modification 3 of Adjustment of Positions of First Right Eye Imaging Device and First Left Eye Imaging Device»

In the First Embodiment, the arrangement of the helmet supporter 10 that allows the positions of the first right eye imaging device 2a1 and the first left eye imaging device 2b 1 to be changeable relative to the helmet 100 so that the line segment S 1 is in parallel to the third straight line L3 is not limited to the arrangement of the Third Embodiment. In the Second Embodiment, the arrangement of the helmet supporter 10 that allows the positions of the first right eye imaging device 2a1 and the first left eye imaging device 2b 1 to be changeable relative to the helmet 100 so that the line segment S2 is in parallel to the fourth straight line L4 is not limited to the arrangement of the Third Embodiment. For example, by converting rotational movement to linear movement by means of a screw, the positions of the first right eye imaging device and the first left eye imaging device relative to the helmet may be changed in a direction in parallel to the third straight line or the fourth straight line when viewed in the left-right direction of the helmet. Furthermore, for example, the helmet supporter may have fixation positions (e.g., screw holes) that are lined up in a direction in parallel to the third straight line or the fourth straight line when viewed in the left-right direction of the helmet. By changing the fixation positions, the positions of the first right eye imaging device and the first left eye imaging device relative to the helmet may be changed in a direction in parallel to the third straight line or the fourth straight line when viewed in the left-right direction of the helmet. Furthermore, by changing the length of insertion of the tabs into the gap between the shell and the liner, the positions of the first right eye imaging device and the first left eye imaging device relative to the helmet may be changed in a direction in parallel to the third straight line or the fourth straight line when viewed in the left-right direction of the helmet.

### «Modification 4 of Adjustment of Positions of First Right Eye Imaging Device and First Left Eye Imaging Device»

According to the Third Embodiment, the helmet supporter 10 is arranged so that the first right eye imaging device 2a1 and the first left eye imaging device 2b 1 are swingable relative to the helmet 100 about the axial line A1 that is in parallel to the left-right direction of the helmet 100. The arrangement with which the first right eye imaging device and the first left eye imaging device are swingable relative to the helmet about the axial line that is in parallel to the left-right direction of the helmet is not limited to the arrangement recited in the Third Embodiment. For example, the helmet supporter may have fixation positions (e.g., screw holes) that are lined up in a circumferential direction centered on an axis in parallel to the left-right direction of the helmet. By changing the fixation positions, the first right eye imaging device and the first left eye imaging device may be swung relative to the helmet about an axial line in parallel to the left-right direction of the helmet. The position of the axial line about which the devices are swung may not be identical with the position of the axial line A1 of the Third Embodiment shown in FIG. 6.

### «Modification 5 of Adjustment of Positions of First Right Eye Imaging Device and First Left Eye Imaging Device»

According to the Third Embodiment, the helmet supporter 10 is arranged so that the first right eye imaging device 2a1 and the first left eye imaging device 2b1 are movable relative to the helmet 100 in the left-right direction of the helmet 100. The arrangement with which the first right eye imaging device and the first left eye imaging device are positionally changed relative to the helmet in the left-right direction of the helmet is not limited to the arrangement recited in the Third Embodiment. For example, the first right eye imaging device and the first left eye imaging device may be positionally changed in the left-right direction of the helmet by changing the positions of the tabs between the shell and the liner. The helmet supporter of the present teaching may allow the positions of the first right eye imaging device and the first left eye imaging device to be changeable relative to the helmet so that a line segment connecting each of the positions of the first right eye imaging device and the first left eye imaging device before the change with the position of the corresponding device after the change is in parallel to the left-right direction when viewed in a direction orthogonal to the left-right direction. This arrangement allows the first right eye imaging device and the first left eye imaging device to be positionally changed relative to the helmet in the left-right direction of the helmet.

### «Modification 6 of Adjustment of Positions of First Right Eye Imaging Device and First Left Eye Imaging Device»

According to the Third Embodiment, the third supporting portion 13, the fourth supporting portion 14, and the fifth supporting portion 15 are swingable relative to the helmet 100 about the axial line A1 that is in parallel to the left-right direction. With this arrangement, the mechanism, which allows the positions of the first right eye imaging device 2a1 and the first left eye imaging device 2b1 to be changeable relative to the helmet 100 so that the line segment S1 connecting each of the positions of the first right eye imaging device 2a1 and the first left eye imaging device 2b1 before the change with the position of the corresponding device after the change is in parallel to the third straight line L3 when viewed in the left-right direction, is swingable relative to the helmet 100 about the axial line A1 in parallel to the left-right direction, together with the first right eye imaging device 2a1 and the first left eye imaging device 2b1. Alternatively, the helmet supporter of the present teaching may be arranged so that the mechanism that swings the first right eye imaging device and the first left eye imaging device relative to the helmet about the axial line in parallel to the left-right direction of the helmet is movable in a direction in parallel to the third straight line relative to the helmet, when viewed in the left-right direction of the helmet.

### «Modification 7 of Adjustment of Positions of First Right Eye Imaging Device and First Left Eye Imaging Device»

The helmet supporter of the present teaching may not allow the position of each of the first right eye imaging device and the first left eye imaging device to be changeable relative to the helmet in the left-right direction of the helmet. The helmet supporter of present teaching may not have the arrangements of the Second Embodiment. The helmet supporter of the present teaching may not allow each of the first right eye imaging device and the first left eye imaging device to be swingable relative to the helmet about the axial line that is in parallel to the left-right direction of the helmet.

### «Modification of Attachment Position of Helmet Supporter»

According to the Third Embodiment, the helmet supporter is attached to a portion of the helmet, which covers the frontal region. Alternatively, the helmet supporter of the present teaching may be attached to portions of the helmet, which cover the ears of the user. Alternatively, the helmet supporter of the present teaching may be attached to portions of the helmet, which cover the cheeks or chin of the user. When the helmet has a brim, the helmet supporter of the present teaching may be attached to the brim of the helmet. The helmet supporter may not be attached to the brim.

### <<Modification of Tabs>>

According to the Third Embodiment, the insertion direction of the tabs 11a is the direction that is substantially upward for the user U wearing the helmet. The insertion direction of the tabs of the helmet supporter of the present teaching, however, is not limited to this direction. For example, the helmet supporter of the present teaching may have a tab that is inserted in a direction that is substantially rearward for the user wearing the helmet. For example, the helmet supporter of the present teaching may have a tab that is inserted in a direction that is substantially downward for the user wearing the helmet. For example, the helmet supporter of the present teaching may have tabs that are different from one another in insertion direction. According to the Third Embodiment, the tabs 11a are inserted into a portion of the helmet, which covers the frontal region of the user U. Alternatively, the helmet supporter of the present teaching may have tabs that are inserted into portions of the helmet, which cover the ears of the user. Alternatively, the helmet supporter of the present teaching may have tabs that are inserted into portions of the helmet, which cover the cheeks or chin of the user. The number of the tabs of the helmet supporter of the present teaching may be one. The helmet supporter of the present teaching may not have the tabs.

### «Modification of Movement Suppressor»

The movement suppressor of the helmet supporter of the present teaching may not be arranged so that an end of the movement suppressor in the insertion direction of the tab and an end of the movement suppressor in the direction opposite to the insertion direction of the tab make contact with the helmet. The helmet supporter of the present teaching may not have the movement suppressor.

### <<Modification of Relation between Helmet Supporter and Helmet>>

The helmet supporter of the present teaching may not be attachable and detachable to and from the helmet. To put it differently, the helmet supporter of the present teaching may be fixed to the helmet.

### <<Modification 1 of Helmet>>

The helmet 100 shown in FIG. 3 (Third Embodiment) is a full face helmet. The full face helmet covers the occipital region almost entirely. The helmet to which the line-of-sight detecting device of the present teaching is applied may be a helmet covering the occipital region only partially. In addition to the above, the full face helmet has portions covering the ears, cheeks, and chin. In this regard, the helmet to which the line-of-sight detecting device of the present teaching is applied may not be a helmet having portions covering the ears, cheeks and chin. The line-of-sight detecting device of the present teaching may be applied to a helmet that does not have a portion covering the chin but has portions covering the ears and cheeks. The line-of-sight detecting device of the present teaching may be applied to a helmet that does not have portions covering the chin and cheeks but has portions covering the ears. The line-of-sight detecting device of the present teaching may be applied to a helmet that does not have portions covering the chin, cheeks, and ears. When the helmet to which the line-of-sight detecting device is applied has portions covering the cheeks and the line-of-sight detecting device includes the tab inserted in a direction that is substantially upward for the user U, the line-of-sight detecting device may have a movement suppressor that is arranged so that its both ends in a substantially up-down direction for the user U are in contact with the helmet.

### <<Modification 2 of Helmet>>

The helmet 100 shown in FIG. 3 (Third Embodiment) includes the shell, the liner, and the interior material. Alternatively, the line-of-sight detecting device of the present teaching may be applied to a helmet that is different form the helmet including the shell, the liner, and the interior material. A helmet to which the line-of-sight detecting device of the present teaching is applied may not include the interior material but include the shell and the liner. The first end point and the second end point of the present teaching may be included in the liner. A helmet to which the line-of-sight detecting device of the present teaching is applied may include the shell, a head band surrounding the head of the user, and a suspension band connected to the head and in contact with the parietal region of the user. In this case, the first end point of the present teaching is included in the head band. The head band may include a sweat-absorbing pad. The helmet including the shell, the head band, and the suspension band may or may not have the liner. When the helmet have the liner, the head band is fixed to the liner or the shell at plural portions, and a gap is formed between the suspension band and the liner. When the helmet does not have the liner, the head band is fixed to the shell at plural portions, and a gap is formed between the suspension band and the shell.

### <<Modification 3 of Helmet>>

The line-of-sight detecting device of the present teaching may be applied to a helmet that does not have a shield. The line-of-sight detecting device of the present teaching may be applied to a helmet that has, in addition to the shield, an inner visor or an outer visor. The inner visor is provided inside the shield, i.e., at a position close to the eyes of the user as compared to the shield. The outer visor is provided outside the shield, i.e., at a position far from the eyes of the user as compared to the shield. When the line-of-sight detecting device has an infrared light emitter as a light source, the inner visor or the outer visor may have a function of blocking infrared light. For example, the inner visor or the outer visor may be provided with an infrared light blocking film. The method of providing the infrared light blocking film has already been described in the Third Embodiment.

### «Modification Regarding Lens of Line-Of-Sight Detecting Device»

The line-of-sight detecting device of the present teaching may have a lens through which a line of sight of the user wearing the helmet passes through. The lens may be provided for each eye. In other words, two lenses may be provided for the respective eyes. Alternatively, one lens may be provided for both eyes. The lens is supported by the helmet supporter. The line-of-sight detecting device of the Third Embodiment does not have a lens. When the line-of-sight detecting device of the Third Embodiment has a lens, the lens may be provided at each of the two frames 15a and 15b shown in FIG. 5. The lens may be fixed to the helmet supporter. The lens may be detachably supported by the helmet supporter. This arrangement makes it possible to attach or detach the lens and change the type of the lens in accordance with each user U who uses the line-of-sight detecting device. The versatility of the line-of-sight detecting device is therefore improved.

The lens may be an ophthalmologic lens (prescription lens). This allows the user to use the line-of-sight detecting device without wearing glasses for visual acuity correction.

The lens may be a protection lens for protecting the eye from solar light. This allows the user to use the line-of-sight detecting device without wearing sun glasses.

When the line-of-sight detecting device includes an infrared light emitter as a light source, the lens may have a function of blocking infrared light. For example, the lens may be provided with an infrared light blocking film. The method of providing the infrared light blocking film has already been described in the Third Embodiment.

### «Modification Regarding Functions of Line-Of-Sight Detecting Device»

Means for outputting data detected or generated by the line-of-sight detecting device of the present teaching is not limited to wireless communication. The line-of-sight detecting device of the present teaching may be an interface unit to which an external storage device is connected, and may not include a wireless communication device. The line-of-sight detecting device of the present teaching may include both an interface unit to which an external storage device is connected and a wireless communication device.

The line-of-sight detecting device of the present teaching may not include the scene imaging device supported by the helmet supporter. The scene imaging device may be provided on a helmet worn by the user U, for example. The line-of-sight detecting device of the present teaching may not include the position detector supported by the helmet supporter. The position detector may be provided on a helmet worn by the user U, for example.

The helmet supporter 10 of the Third Embodiment supports the processor 7 which is configured to analyze the images of the both eyes taken by the first right eye imaging device 2a1 and the first left eye imaging device 2b1. Alternatively, the line-of-sight detecting device of the present teaching may include a processor configured to analyze images of both eyes taken by the first right eye imaging device and the first left eye imaging device, which is not supported by the helmet supporter. Alternatively, the line-of-sight detecting device of the present teaching may not include a processor configured to analyze images of both eyes taken by the first right eye imaging device and the first left eye imaging device.

### <<Modification of Use of Line-Of-Sight Detecting Device>>

The line-of-sight detecting device of the present teaching may not be used in combination with a virtual image generator configured to generate, for example, a virtual image that is an image of virtual reality (VR) or augmented reality (AR). The line-of-sight detecting device of the present teaching may be used in combination with a virtual image generator configured to generate a virtual image.

The first right eye imaging device of this specification is encompassed in a right eye imaging unit recited in PCT/JP2020/019862 that is a basic application of the subject application. The first left eye imaging device of this specification is encompassed in a left eye imaging unit of the basic application. The first right eye imaging device 2a1 in this specification is equivalent to an eye imaging device 2 of the basic application. The second right eye imaging device 2b1 in this specification is equivalent to the eye imaging device 2 of the basic application. The first left eye imaging device 2b1 in this specification is equivalent to the eye imaging device 2 of the basic application. The second left eye imaging device 2b2 in this specification is equivalent to the eye imaging device 2 of the basic application. The movement suppressor in this specification is encompassed in a movement suppressor of the basic application. The movement suppressors 16a and 16b in this specification are equivalent to movement suppressing units 16a and 16b of the basic application.

### [Reference Signs List]

1 line-of-sight detecting device
2a1 first right eye imaging device
2a2 second right eye imaging device
2b1 first left eye imaging device
2b2 second left eye imaging device
3 light source
10 helmet supporter
11a tab
16 movement suppressor
100 helmet
101 shell
102 liner
U user

## Claims

1. A line-of-sight detecting device comprising:
a first right eye imaging device which is configured to image the right eye of a user in order to detect the direction of a line of sight of the right eye of the user;
a first left eye imaging device which is configured to image the left eye of a user in order to detect the direction of a line of sight of the left eye of the user; and
a helmet supporter which is supported by a helmet worn by the user and supports the first right eye imaging device and the first left eye imaging device,
the helmet supporter being supported by the helmet and supporting the first right eye imaging device and the first left eye imaging device so that positions of the first right eye imaging device and the first left eye imaging device are changeable relative to the helmet, and
when (i) a point which is in a part in contact with the frontal region of the user in a helmet vertical cross section that is a cross section of the helmet taken along a direction orthogonal to a left-right direction of the helmet, and which is farthest from the parietal region of the user, is referred to as a first end point,
(ii) a point that is in a part in contact with the occipital region or the regio cervicalis posterior of the user in the helmet vertical cross section and is farthest from the parietal region of the user is referred to as a second end point,
(iii) a straight line passing through the first end point and the second end point is referred to as a first straight line,
(iv) a straight line which passes through a point equidistant from the first end point and the second end point and on the first straight line and which is orthogonal to both the left-right direction and the first straight line is referred to as a second straight line,
(v) in the helmet vertical cross section, a portion which includes a part in contact with the frontal region of the user and has the first straight line and the second straight line as boundaries is referred to as a helmet front upper portion, and
(vi) in the helmet vertical cross section, a portion which is connected to the helmet front upper portion at the second straight line and has the first straight line and the second straight line as boundaries is referred to as a helmet rear upper portion,
the helmet supporter allowing the positions of the first right eye imaging device and the first left eye imaging device to be changeable relative to the helmet so that a line segment connecting each of the positions of the first right eye imaging device and the first left eye imaging device before change with the position of the corresponding device after the change is in parallel to a third straight line that passes through the first end point and the helmet front upper portion without passing through the helmet rear upper portion when viewed in the left-right direction.

2. The line-of-sight detecting device according to claim 1, wherein the helmet supporter allows the positions of the first right eye imaging device and the first left eye imaging device to be changeable relative to the helmet so that the first right eye imaging device and the first left eye imaging device move in a direction in parallel to the third straight line when viewed in the left-right direction.

3. The line-of-sight detecting device according to claim 1 or 2, wherein the helmet supporter allows the positions of the first right eye imaging device and the first left eye imaging device to be changeable relative to the helmet so that each of the first right eye imaging device and the first left eye imaging device moves relative to the helmet along a curved locus when viewed in the left-right direction and the line segment connecting each of the positions of the first right eye imaging device and the first left eye imaging device before the change with the position of the corresponding device after the change is in parallel to the third straight line when viewed in the left-right direction.

4. The line-of-sight detecting device according to any one of claims 1 to 3, wherein the helmet supporter is arranged so that the first right eye imaging device and the first left eye imaging device are swingable relative to the helmet about an axial line that is in parallel to the left-right direction.

5. The line-of-sight detecting device according to any one of claims 1 to 4, wherein the helmet supporter allows the positions of the first right eye imaging device and the first left eye imaging device to be changeable relative to the helmet so that a line segment connecting each of the positions of the first right eye imaging device and the first left eye imaging device before the change with the position of the corresponding device after the change is in parallel to a fourth straight line that passes through the first end point and the helmet rear upper portion without passing through the helmet front upper portion when viewed in the left-right direction.

6. The line-of-sight detecting device according to any one of claims 1 to 5, wherein the helmet supporter allows the positions of the first right eye imaging device and the first left eye imaging device to be changeable relative to the helmet so that a line segment connecting each of the positions of the first right eye imaging device and the first left eye imaging device before the change with the position of the corresponding device after the change is in parallel to the left-right direction when viewed in a direction orthogonal to the left-right direction.

7. The line-of-sight detecting device according to any one of claims 1 to 6, further comprising:
at least one second right eye imaging device which is configured to image the right eye of the user in order to detect the direction of the line of sight of the right eye of the user; and
at least one second left eye imaging device which is configured to image the left eye of the user in order to detect the direction of the line of sight of the left eye of the user,
the helmet supporter allowing the positions of the first right eye imaging device and the first left eye imaging device to be changeable relative to the helmet so that a line segment connecting each of the positions of the at least one second right eye imaging device and the at least one second left eye imaging device before the change with the position of the corresponding device after the change is in parallel to a straight line that passes through the first end point and the helmet front upper portion without passing through the helmet rear upper portion when viewed in the left-right direction.

8. The line-of-sight detecting device according to claim 7, wherein the helmet supporter allows the positions of the first right eye imaging device and the at least one second right eye imaging device to be integrally changeable relative to the helmet, and allows the positions of the first left eye imaging device and the at least one second left eye imaging device to be integrally changeable relative to the helmet.

9. The line-of-sight detecting device according to any one of claims 1 to 8, wherein the helmet supporter is detachably attached to the helmet.

10. The line-of-sight detecting device according to any one of claims 1 to 9, wherein
the helmet includes a shell and a liner provided inside the shell, and
the helmet supporter includes a tab that is inserted into a gap between the shell and the liner so as to be in contact with both the shell and the liner.

11. The line-of-sight detecting device according to claim 10, wherein the helmet supporter includes a movement suppressor which is configured to suppress the helmet supporter from moving relative to the helmet in a direction opposite to an insertion direction in which the tab is inserted.

12. The line-of-sight detecting device according to claim 11, wherein the movement suppressor is configured to suppress the helmet supporter from moving relative to the helmet in the direction opposite to the insertion direction in such a way that an end of the movement suppressor in the insertion direction and an end of the movement suppressor in the direction opposite to the insertion direction make contact with the helmet.

13. The line-of-sight detecting device according to any one of claims 1 to 12, further comprising light sources which are supported by the helmet supporter and are configured to apply light to the both eyes of the user wearing the helmet.

14. The line-of-sight detecting device according to any one of claims 1 to 13, wherein, the helmet is a vehicle helmet that is worn when the user rides a vehicle.
